(19) Europäisches Patentamt
European Patent Office
Office européen des brevets

(11) **EP 4 481 441 A1**

(12) **EUROPEAN PATENT APPLICATION**
published in accordance with Art. 153(4) EPC

(43) Date of publication:
**25.12.2024  Bulletin 2024/52**

(21) Application number: **23778258.6**

(22) Date of filing: **28.03.2023**

(51) International Patent Classification (IPC):
**G01S 19/30** (2010.01)        **G01S 19/24** (2010.01)
**G04R 20/02** (2013.01)

(52) Cooperative Patent Classification (CPC):
**G01S 19/30;** G01S 19/24; G04R 20/02

(86) International application number:
**PCT/CN2023/084546**

(87) International publication number:
**WO 2023/185893 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **30.03.2022  CN 202210327298**

(71) Applicant: **Huawei Technologies Co., Ltd.
Shenzhen, Guangdong 518129 (CN)**

(72) Inventors:
• **ZHONG, Jilei
  Shenzhen, Guangdong 518129 (CN)**

• **GAN, Wenyu
  Shenzhen, Guangdong 518129 (CN)**
• **QIAN, Feng
  Shenzhen, Guangdong 518129 (CN)**
• **LIN, Lixin
  Shenzhen, Guangdong 518129 (CN)**
• **WANG, Bao
  Shenzhen, Guangdong 518129 (CN)**
• **SUN, Shangbang
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **SATELLITE SIGNAL CAPTURING METHOD AND RELATED APPARATUS**

(57)     This application provides a satellite signal acquisition method. A terminal may receive a navigation message (including an ephemeris parameter, a 1PPS pulse, an ionospheric parameter, and the like) broadcast by a satellite by using an RNSS signal, and determine a time for propagating the RDSS outbound signal from a satellite ground device to the satellite and a time for propagating the RDSS outbound signal from the satellite to the terminal. Further, the terminal may determine a phase shift of a chip in the propagation process of the RDSS outbound signal. The terminal may acquire the RDSS outbound signal based on the phase shift in the propagation process of the RDSS outbound signal. In this way, the terminal can quickly acquire the RDSS outbound signal.

FIG. 7

## Description

This application claims priority to Chinese Patent Application No. 202210327298.1, filed with the China National Intellectual Property Administration on March 30, 2022 and entitled "SATELLITE SIGNAL ACQUISITION METHOD AND RELATED APPARATUS", which is incorporated herein by reference in its entirety.

## TECHNICAL FIELD

This application relates to the field of satellite communication technologies, and in particular, to a satellite signal acquisition method and a related apparatus.

## BACKGROUND

The BeiDou satellite navigation system is an important infrastructure developed by China, and integrates positioning, timing, and communication. The BeiDou short message communication service is a feature of the BeiDou satellite navigation system that distinguishes the BeiDou satellite navigation system from other global navigation systems such as the global positioning system (global positioning system, GPS), the global navigation satellite system (global navigation satellite system, GLONASS), and the galileo satellite navigation system (galileo satellite navigation system, GALILEO). The BeiDou short message communication service is especially suitable for communication in areas in which mobile communication is unavailable or cannot be implemented, or the existing communication system has been damaged, such as oceans, deserts, grasslands, and uninhabited lands. The short message system of BeiDou 3 is upgraded, which allows civil access to necessary resources of the communication system of the BeiDou short message service. It is necessary to design corresponding communication protocols for civil services and device features based on features of the communication system of the BeiDou short message service.

Currently, with the short message service communication system of BeiDou 3 served by three geosynchronous earth orbit (geosynchronous earth orbit, GEO) satellites, when there are limited hardware resources, for example, few tracking channels and correlators on a terminal, it is time-consuming for the terminal to acquire a satellite signal.

## SUMMARY

This application provides a satellite signal acquisition method and a related apparatus, so that a terminal can quickly acquire a satellite signal.

According to a first aspect, this application provides a satellite signal acquisition method, including: A terminal receives a navigation message broadcast by a satellite by using a radio navigation satellite service RNSS signal, and determines a position of the terminal, a speed of the terminal, and an ephemeris parameter, an ionospheric parameter, and a clock synchronization pulse of the satellite; the terminal determines, based on the position of the terminal, the speed of the terminal, the ephemeris parameter, the ionospheric parameter, and a position of a satellite ground device, a first propagation time for propagating a radio determination satellite service RDSS outbound signal from the satellite ground device to the satellite and a second propagation time for propagating the RDSS outbound signal from the satellite to the terminal; the terminal determines a propagation delay of the RDSS outbound signal based on the first propagation time and the second propagation time; the terminal determines, based on the propagation delay of the RDSS outbound signal and the clock synchronization pulse, a phase shift of the RDSS outbound signal in the propagation process; and the terminal acquires the RDSS outbound signal based on the phase shift of the RDSS outbound signal in the propagation process.

According to the satellite signal acquisition method provided in this application, the terminal may receive the navigation message (including the ephemeris parameter, a 1PPS pulse, the ionospheric parameter, and the like) broadcast by the satellite by using the RNSS signal, and determine the time for propagating the RDSS outbound signal from the satellite ground device to the satellite and the time for propagating the RDSS outbound signal from the satellite to the terminal. Further, the terminal may determine a phase shift of a chip in the propagation process of the RDSS outbound signal. The terminal may acquire the RDSS outbound signal based on the phase shift in the propagation process of the RDSS outbound signal. In this way, the terminal can quickly acquire the RDSS outbound signal.

In a possible implementation, the method further includes: The terminal determines, based on the position of the terminal, the speed of the terminal, the ephemeris parameter, and a downlink frequency at which the satellite forwards the RDSS outbound signal, a first doppler shift of the RDSS outbound signal from the satellite to the terminal; the terminal determines a receiving frequency of the RDSS outbound signal based on the downlink frequency at which the satellite forwards the RDSS outbound signal and the first doppler shift; and that the terminal acquires the RDSS outbound signal based on the phase shift of the RDSS outbound signal in the propagation process specifically includes: The terminal acquires the RDSS outbound signal based on the phase shift of the RDSS outbound signal in the propagation process and the receiving frequency of the RDSS outbound signal.

In this way, the first doppler shift of the RDSS outbound signal from the satellite to the terminal is calculated, so that the terminal can accurately determine the receiving frequency of the RDSS outbound signal. In this way, a speed of acquiring the RDSS outbound signal is improved.

In a possible implementation, the method further includes: The terminal determines a local crystal oscillator frequency deviation of the terminal 100 based on the clock synchronization pulse, a local crystal oscillator frequency of the terminal, and the downlink frequency at which the satellite forwards the RDSS outbound signal; and that the terminal determines a receiving frequency of the RDSS outbound signal based on the downlink frequency at which the satellite forwards the RDSS outbound signal, the first doppler shift, and the second doppler shift specifically includes: The terminal determines the receiving frequency of the RDSS outbound signal based on the downlink frequency at which the satellite forwards the RDSS outbound signal, the first doppler shift, the second doppler shift, and the local crystal oscillator frequency deviation of the terminal.

In this way, the local crystal oscillator frequency deviation of the terminal is further considered, so that the terminal can accurately determine the receiving frequency of the RDSS outbound signal. In this way, the speed of acquiring the RDSS outbound signal is improved.

In a possible implementation, that the terminal determines, based on the position of the terminal, the speed of the terminal, the ephemeris parameter, and a downlink frequency at which the satellite forwards the RDSS outbound signal, a first doppler shift of the RDSS outbound signal from the satellite to the terminal specifically includes: The terminal determines a satellite position and a satellite speed of the satellite based on the ephemeris parameter; and the terminal determines the first doppler shift based on the satellite position, the satellite speed, the position of the terminal, the speed of the terminal, and the downlink frequency at which the satellite forwards the RDSS outbound signal.

In a possible implementation, that the terminal acquires the RDSS outbound signal based on the phase shift of the RDSS outbound signal in the propagation process and the receiving frequency of the RDSS outbound signal specifically includes: The terminal determines a receiving frequency search range of the RDSS outbound signal based on the receiving frequency of the RDSS outbound signal and a frequency error; and the terminal acquires the RDSS outbound signal based on the phase shift of the RDSS outbound signal in the propagation process and the receiving frequency search range of the RDSS outbound signal.

In this way, the frequency error is further considered based on the receiving frequency of the RDSS outbound signal, so that fault tolerance for acquiring the RDSS outbound signal can be higher.

In a possible implementation, that the terminal acquires the RDSS outbound signal based on the phase shift of the RDSS outbound signal in the propagation process specifically includes: The terminal determines a phase shift range of the RDSS outbound signal based on the phase shift and a phase shift error of the RDSS outbound signal in the propagation process; and the terminal acquires the RDSS outbound signal in time domain based on the phase shift range of the RDSS outbound signal.

In this way, the phase shift error is further considered based on the phase shift of the RDSS outbound signal, so that fault tolerance for acquiring the RDSS outbound signal can be higher.

In a possible implementation, that the terminal determines, based on the position of the terminal, the speed of the terminal, the ephemeris parameter, the ionospheric parameter, and a position of a satellite ground device, a first propagation time for propagating a radio determination satellite service RDSS outbound signal from the satellite ground device to the satellite and a second propagation time for propagating the RDSS outbound signal from the satellite to the terminal specifically includes: The terminal determines the satellite position and the satellite speed of the satellite based on the ephemeris parameter and the ionospheric parameter; the terminal determines an ionospheric delay of the RNSS signal based on the ionospheric parameter, and determines an uplink ionospheric propagation delay of the RDSS outbound signal and a downlink ionospheric propagation delay of the RDSS outbound signal based on the ionospheric delay of the RNSS signal; the terminal determines, by using a first tropospheric delay model, an uplink tropospheric propagation delay of the RDSS outbound signal based on the satellite position of the satellite and the position of the satellite ground device; the terminal determines, by using a second tropospheric delay model, a downlink tropospheric propagation delay of the RDSS outbound signal based on the satellite position of the satellite and the position of the terminal; the terminal determines the first propagation time based on the uplink tropospheric propagation delay of the RDSS outbound signal in the process of propagating the RDSS outbound signal from the satellite ground device to the satellite, the uplink ionospheric propagation delay of the RDSS outbound signal in the process of propagating the RDSS outbound signal from the satellite ground device to the satellite, a transmission delay of the satellite ground device, the position of the satellite ground device, and the position of the satellite; and the terminal determines the second propagation time based on the downlink tropospheric propagation delay of the RDSS outbound signal in the process of propagating the RDSS outbound signal from the satellite to the terminal, the downlink ionospheric propagation delay of the RDSS outbound signal in the process of propagating the RDSS outbound signal from the satellite to the terminal, the position of the satellite, and the position of the terminal.

In a possible implementation, the phase shift of the RDSS outbound signal in the propagation process includes a chip offset for the phase shift of the RDSS outbound signal in the propagation process. That the terminal determines, based on the propagation delay of the RDSS outbound signal and the clock synchronization pulse, a phase shift of the RDSS outbound signal in the propagation process specifically includes: The terminal determines the chip offset for the phase shift of the RDSS outbound signal in the propagation process based on the propagation delay of the RDSS outbound signal, the clock synchronization pulse, a quantity L of chips of a spreading code sequence of the RDSS outbound signal, a sequence period of the spreading code sequence, and a secondary code period in the RDSS outbound signal.

In a possible implementation, the first propagation time is determined according to the following formula:

$$t_u = \frac{\sqrt{(x_c - x_s)^2 + (y_c - y_s)^2 + (z_c - z_s)^2}}{c} + t_c + t_{trop-u} + t_{i-u}$$

Herein, $t_u$ is the first propagation time, $x_c$, $y_c$, and $z_c$ are position coordinates of the satellite ground device at a moment T in a three-dimensional coordinate system, $x_s$, $y_s$, and $z_s$ are position coordinates of the satellite at the moment T in the three-dimensional coordinate system, $t_c$ is the transmission delay of the satellite ground device, $t_{trop-u}$ is the uplink tropospheric propagation delay of the RDSS outbound signal, $t_{i-u}$ is the uplink ionospheric propagation delay of the RDSS outbound signal, $c$ is a propagation speed of an electromagnetic wave, and the moment T may be a moment at which the terminal triggers the process of acquiring the RDSS outbound signal.

In a possible implementation, the second propagation time is determined according to the following formula:

$$t_d = \frac{\sqrt{(x_u - x_s)^2 + (y_u - y_s)^2 + (z_u - z_s)^2}}{c} + t_{trop-d} + t_{i-d}$$

Herein, $t_d$ is the second propagation time, $x_u$, $y_u$, and $z_u$ are position coordinates of the terminal at a moment T in a three-dimensional coordinate system, $x_s$, $y_s$, and $z_s$ are position coordinates of the satellite at the moment T in the three-dimensional coordinate system, $t_{trop-d}$ is the downlink tropospheric propagation delay of the RDSS outbound signal, $t_{i-d}$ is the downlink ionospheric propagation delay of the RDSS outbound signal, and $c$ is a propagation speed of an electromagnetic wave.

In a possible implementation, the propagation delay of the RDSS outbound signal is determined according to the following formula:

$$\Delta t = t_u + t_d$$

Herein, $\Delta t$ is the propagation delay of the RDSS outbound signal, $t_u$ is the first propagation time, and $t_d$ is the second propagation time.

In a possible implementation, the clock synchronization pulse is a pulse per second 1PPS; and a phase shift of a chip in the propagation process of the RDSS outbound signal is determined according to the following formula:

$$\text{initChip} = \left(\frac{1000}{T_r} * L * \frac{T_r}{T_m} - \Delta t * L\right) \% \left(L * \frac{T_r}{T_m}\right) \% L$$

Herein, initChip is the chip offset for the phase shift of the RDSS outbound signal in the propagation process, $T_r$ is the secondary code period in the RDSS outbound signal, L is the quantity of chips of the spreading code sequence of the RDSS outbound signal, and $T_m$ is the sequence period of the spreading code sequence of the RDSS outbound signal.

In a possible implementation, the receiving frequency of the RDSS outbound signal is determined according to the following formula:

$$f_r = f_s + fd_1 + fd_2$$

Herein, $f_r$ is the receiving frequency of the RDSS outbound signal, $f_s$ is the downlink frequency at which the satellite forwards the RDSS outbound signal, $fd_1$ is the first doppler shift, and $fd_2$ is the local crystal oscillator frequency deviation of the terminal.

In a possible implementation, the satellite is a geosynchronous earth orbit GEO satellite.

In a possible implementation, the terminal pre-stores the position of the satellite ground device.

In the first aspect, the satellite may be a satellite system that has a satellite signal acquisition requirement, for example, a BeiDou communication system based on a BeiDou short message service. In the BeiDou communication system, the satellite may be a BeiDou short message satellite, and the satellite ground device may be a BeiDou network device.

According to a second aspect, this application provides a terminal, including one or more processors and one or more memories. The one or more memories are coupled to the one or more processors. The one or more memories are configured to store computer program code. The computer program code includes computer instructions. When the one or more processors execute the computer instructions, a communication apparatus is enabled to perform the method in any possible implementation of any one of the foregoing aspects.

According to a third aspect, an embodiment of this application provides a computer storage medium, including computer instructions. When the computer instructions are run on a terminal, the terminal is enabled to perform the method in any possible implementation of any one of the foregoing aspects.

According to a fourth aspect, an embodiment of this application provides a computer program product. When the computer program product is run on a computer, the computer is enabled to perform the method in any possible implementation of any one of the foregoing aspects.

According to a fifth aspect, this application provides a chip or a chip system, applied to a terminal and including a processing circuit and an interface circuit. The interface circuit is configured to receive code instructions and transmit the code instructions to the processing circuit. The processing circuit is configured to run the code instructions to perform the method in any possible implementation of the first aspect.

For beneficial effects of the second aspect to the fifth aspect, refer to the beneficial effects of the first aspect. Details are not described again.

## BRIEF DESCRIPTION OF DRAWINGS

FIG. 1 is a diagram of an architecture of a BeiDou communication system according to an embodiment of this application;
FIG. 2A is a diagram of a process of inbound data transmission in a BeiDou communication system according to an embodiment of this application;
FIG. 2B is a diagram of a process of outbound data transmission in a BeiDou communication system according to an embodiment of this application;
FIG. 3 is a diagram of a structure of a terminal according to an embodiment of this application;
FIG. 4A, FIG. 4B, and FIG. 4C are a diagram of a protocol encapsulation architecture for outbound data of a BeiDou communication system according to an embodiment of this application;
FIG. 5A, FIG. 5B, and FIG. 5C are a diagram of a protocol parsing architecture for outbound data of a BeiDou communication system according to an embodiment of this application;
FIG. 6 is a diagram of an RDSS outbound signal propagation process according to an embodiment of this application;
FIG. 7 is a diagram of a time-domain phase offset of an RDSS outbound signal according to an embodiment of this application;
FIG. 8A, FIG. 8B, and FIG. 8C are a schematic flowchart of a satellite signal acquisition method according to an embodiment of this application;
FIG. 9 is a diagram of a structure of a communication apparatus according to an embodiment of this application;
FIG. 10 is a diagram of a structure of another communication apparatus according to an embodiment of this application;
FIG. 11 is a diagram of a structure of another communication apparatus according to an embodiment of this application; and
FIG. 12 is a diagram of a structure of another communication apparatus according to an embodiment of this application.

## DESCRIPTION OF EMBODIMENTS

The technical solutions according to embodiments of this application are clearly and completely described in the following with reference to accompanying drawings. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

The following terms "first" and "second" are merely used for description, and shall not be understood as an indication or implication of relative importance or implicit indication of a quantity of indicated technical features. Therefore, features limited by "first" and "second" may explicitly or implicitly include one or more of the features. In the descriptions of embodiments of this application, unless otherwise specified, "a plurality of" means two or more.

**The following describes a BeiDou communication system 10 according to an embodiment of this application.**

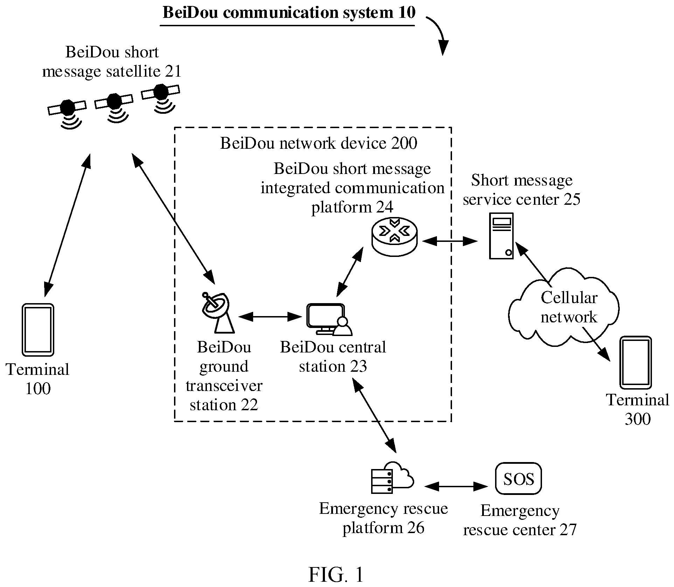

FIG. 1 is a diagram of an architecture of the BeiDou communication system 10 according to an embodiment of this application.

As shown in FIG. 1, the BeiDou communication system 10 may include a terminal 100, a BeiDou short message satellite 21, a BeiDou network device 200, a short message service center 25, and a terminal 300. Optionally, the BeiDou communication system 10 may further include an emergency rescue platform 26 and an emergency rescue center 27.

The terminal 100 may send short message information to the BeiDou short message satellite 21. The BeiDou short message satellite 21 only performs relay, and directly forwards the short message information sent by the terminal 100 to the BeiDou network device 200 on the ground. The BeiDou network device 200 may parse, according to a BeiDou communication protocol, the short message information forwarded by the satellite, and forward, to the short message service center (short message service center, SMSC) 25, message content that is of a general message type and that is obtained through parsing the short message information. The short message service center 25 may forward the message content to the terminal 300 through a conventional cellular communication network. The BeiDou network device 200 may also send, through the emergency rescue platform 26 to the emergency rescue center 27, a message that is of an emergency help type and that is sent by the terminal 100.

The terminal 300 may also send a short message to the short message service center 25 through the conventional cellular communication network. The short message service center 25 may forward the short message from the terminal 300 to the BeiDou network device 200. The BeiDou network device 200 may send the short message from the terminal 300 to the terminal 100 through relay of the BeiDou short message satellite 21.

The BeiDou network device 200 may include a BeiDou ground transceiver station 22, a BeiDou central station 23, and a BeiDou short message integrated communication platform 24. The BeiDou ground transceiver station 22 may include one or more devices having a sending function and one or more devices having a receiving function, or may include one or more devices having a sending function and a receiving function. This is not limited herein. The BeiDou ground transceiver station 22 may be used for a data processing function of the BeiDou network device 200 at a physical (physical layer protocol, PHY) layer. The BeiDou central station 23 may be used for a data processing function of the BeiDou network device 200 at a satellite link control (satellite link control protocol, SLC) layer and a message data convergence protocol (message data convergence protocol, MDCP) layer. The BeiDou short message integrated communication platform 24 may be used for a data processing function at an application (application layer protocol, APP) layer.

Because the BeiDou communication system 10 performs communication through a satellite link, main characteristics of the BeiDou communication system 10 are a long delay (about 270 ms in one direction) and a large link loss. Currently, a main service supported by the BeiDou communication system 10 is a burst short message service. Link state management, mobility management, broadcast control information, and the like are not supported.

The terminal 100 may actively send data to the BeiDou network device 200 through the BeiDou short message satellite 21. However, because there is no air interface signaling, the central station on the ground cannot actively page a user. Because a transmission distance in satellite communication is long, the BeiDou communication system 10 has a high requirement on a transmit power of the terminal 100. Due to a limitation of a radio frequency component on the current terminal 100, the terminal 100 cannot continuously send signals to the BeiDou short message satellite 21 for a long time. To avoid damaging the radio frequency component on the terminal 100 as much as possible, after the radio frequency component of the terminal 100 keeps working in a sending state for a period of time, the radio frequency component needs to stop working for a period of time before switching to the sending state and continuing working. Duration of the sending state of the terminal 100 is determined by a bottom-layer hardware capability of the terminal 100. In the BeiDou communication system 10, to ensure that data received by the terminal 100 and data sent by the terminal 100 do not interfere with each other, the terminal 100 does not simultaneously support data sending and data receiving. After sending data, the terminal 100 needs to wait to receive data sent by the BeiDou network device 200.

A working mode of the BeiDou network device 200 may be a duplex mode for receiving and sending data simultaneously, and the BeiDou network device 200 can send and receive data for a long time.

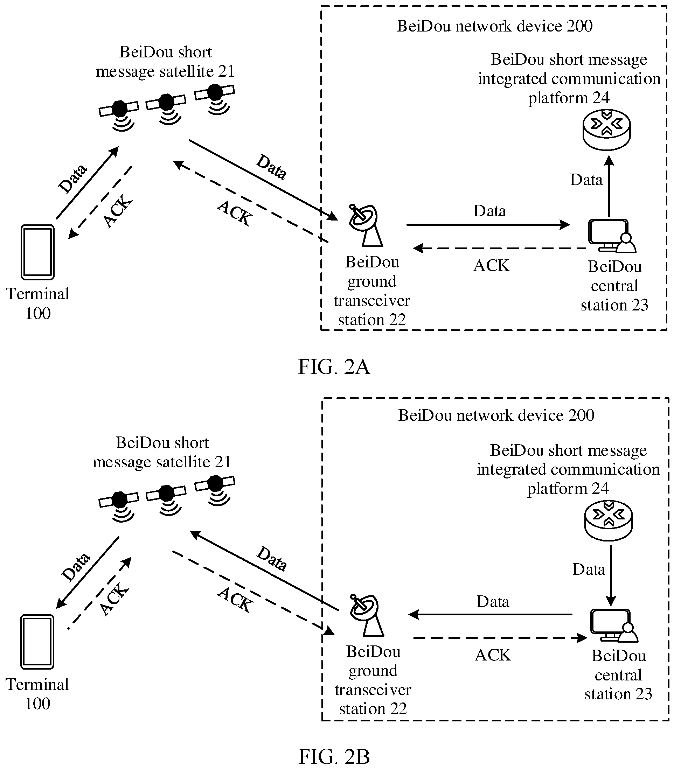

**FIG. 2A shows a process of inbound data transmission in a BeiDou communication system according to an embodiment of this application.**

As shown in FIG. 2A, inbound data transmission may mean that the terminal 100 sends data to the BeiDou network device 200. For example, the terminal 100 may send a data frame to the BeiDou ground transceiver station 22. The BeiDou ground transceiver station 22 may send the data frame to the BeiDou central station 23. The BeiDou central station 23 may aggregate data frames into an application layer packet and report the application layer packet to the BeiDou short message integrated communication platform 24. After receiving the data frame sent by the terminal 100, the BeiDou central station 23 may return an acknowledge (acknowledge, ACK) character of the SLC layer to the terminal 100. The ACK may indicate whether the BeiDou network device 200 successfully receives the data frame sent by the terminal 100.

**FIG. 2B shows a process of outbound data transmission in a BeiDou communication system according to an embodiment of this application.**

As shown in FIG. 2B, outbound data transmission may mean that the BeiDou network device 200 sends data to the terminal 100. For example, the BeiDou short message integrated communication platform 24 in the BeiDou network device 200 may send an application layer packet to the BeiDou central station 23. Then, the BeiDou central station 23 may segment the application layer packet into one or more data frames and send the one or more data frames to the BeiDou ground transceiver station 22, and the BeiDou short message satellite 21 relays the one or more data frames and sends the one or more data frames to the terminal 100. Optionally, after receiving the data frames, the terminal 100 may return an ACK of the SLC layer to the BeiDou central station 23. The ACK may indicate whether the terminal 100 successfully receives the data frames sent by the BeiDou network device 200.

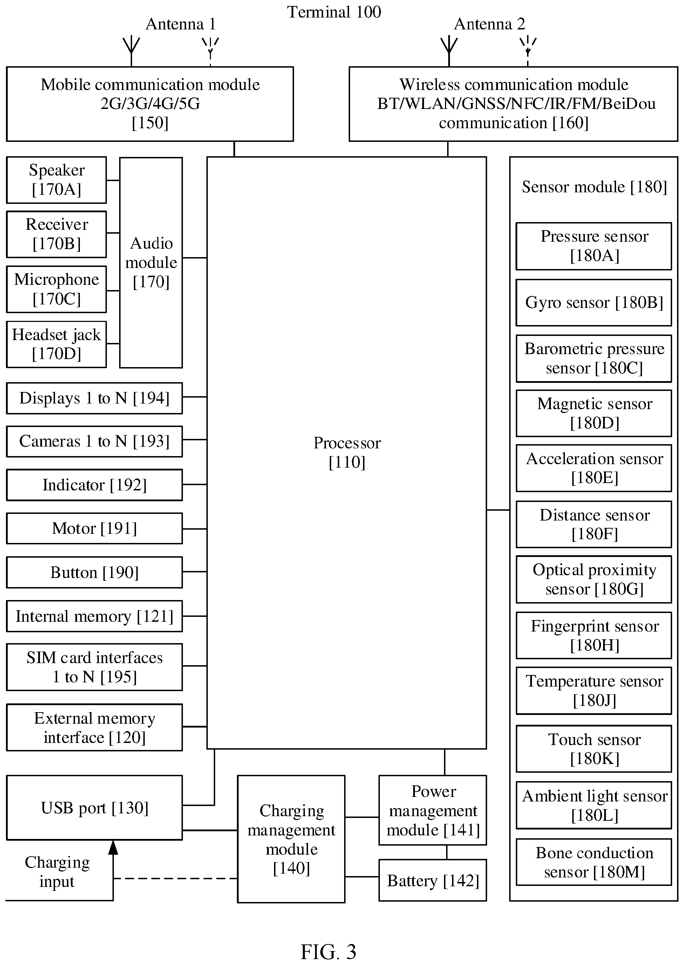

**FIG. 3 is a diagram of a structure of the terminal 100.**

The following specifically describes embodiments by using the terminal 100 as an example. It should be understood that the terminal 100 shown in FIG. 3 is merely an example, and the terminal 100 may have more or fewer components than those shown in FIG. 3, two or more components may be combined, or there may be a different component configuration. Various components shown in the FIG. 3 may be implemented in hardware, software, or a combination of hardware and software that includes one or more signal processing and/or application-specific integrated circuits.

The terminal 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of the present invention does not constitute a specific limitation on the terminal 100. In some other embodiments of this application, the terminal 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal 100. The controller may generate an operation control signal based on instruction operation code and a time sequence signal, to control instruction fetching and instruction execution.

A memory may be further disposed in the processor 110, and is configured to store instructions and data. In some embodiments, the memory in the processor 110 is a cache. The memory may store an instruction or data that has been used or that is cyclically used by the processor 110. If the processor 110 needs to use the instruction or the data again, the processor may directly invoke the instruction or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communication module 160 through the I2S interface, to implement a function of answering a call through a Bluetooth headset.

The PCM interface may also be used for audio communication, and analog signal sampling, quantization, and coding. In some embodiments, the audio module 170 may be coupled to the wireless communication module 160 through a PCM bus interface. In some embodiments, the audio module 170 may alternatively transfer an audio signal to the wireless communication module 160 through the PCM interface, to implement a function of answering a call with the Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, a UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music with a Bluetooth headset.

The MIPI may be configured to connect the processor 110 to peripheral components such as the display 194 and the camera 193. The MIPI includes a camera serial interface (camera serial interface, CSI), a display serial interface (display serial interface, DSI), and the like. In some embodiments, the processor 110 communicates with the camera 193 through the CSI, to implement a photographing function of the terminal 100. The processor 110 communicates with the display 194 through the DSI, to implement a display function of the terminal 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may be further configured as the I2C interface, the I2S interface, the UART interface, the MIPI, or the like.

The USB port 130 is a port that conforms to a USB standard specification, and may be specifically a mini USB port, a micro USB port, a USB Type C port, or the like. The USB port 130 may be configured to connect to the charger to charge the terminal 100, or may be configured to exchange data between the terminal 100 and a peripheral device, or may be configured to connect to a headset, to play an audio by using the headset. The port may be further configured to connect to another electronic device like an AR device.

It may be understood that interface connection relationships between the modules shown in this embodiment of the present invention are merely examples for description, and do not constitute a limitation on a structure of the terminal 100. In some other embodiments of this application, the terminal 100 may alternatively use an interface connection manner different from the interface connection manner in this embodiment, or a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the terminal 100. The charging management module 140 may further supply power to the electronic device by using the power management module 141 when the battery 142 is charged.

The power management module 141 is configured to connect the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be configured to monitor parameters such as a battery capacity, a battery cycle count, and battery health (electric leakage and impedance). In some other embodiments, the power management module 141 may alternatively be disposed in the processor 110. In some other embodiments, the power management module 141 and the charging management module 140 may alternatively be disposed in a same device.

A wireless communication function of the terminal 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal 100 may be configured to cover one or more communication bands. Different antennas may be multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a solution to wireless communication such as 2G/3G/4G/5G applied to the terminal 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal to an electromagnetic wave for radiation through the antenna 1. In some embodiments, at least some functional modules in the mobile communication module 150 may be disposed in the processor 110. In some embodiments, at least some functional modules in the mobile communication module 150 and at least some modules in the processor 110 may be disposed in a same device.

The modem processor may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then the demodulator transmits the low frequency baseband signal obtained through demodulation to the baseband processor for processing. The low frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and the modem processor and the mobile communication module 150 or another functional module may be disposed in a same device.

The wireless communication module 160 may provide a solution to wireless communication applied to the terminal 100, for example, a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), a satellite communication module, frequency modulation (frequency modulation, FM), near field communication (near field communication, NFC), and an infrared (infrared, IR) technology. The wireless communication module 160 may be one or more components integrating at least one communication processing module. The wireless communication module 160 receives an electromagnetic wave through the antenna 2, performs processing like frequency modulation and filtering on the electromagnetic wave signal, and sends a processed signal to the processor 110. The wireless communication module 160 may further receive a to-be-sent signal from the processor 110, perform frequency modulation and amplification on the signal, and convert the signal to an electromagnetic wave for radiation through the antenna 2.

The satellite communication module may be configured to communicate with a satellite network device. For example, in a BeiDou communication system, the satellite communication module may communicate with the BeiDou network device 200, and the satellite communication module may support short message transmission with the BeiDou network device 200.

In some embodiments, in the terminal 100, the antenna 1 and the mobile communication module 150 are coupled, and the antenna 2 and the wireless communication module 160 are coupled, so that the terminal 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The terminal 100 implements a display function by using the GPU, the display 194, the application processor, and the like. The GPU is a microprocessor for image processing, and is connected to the display 194 and the application processor. The GPU is configured to: perform mathematical and geometric calculation, and perform image rendering. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD). The display panel may alternatively be manufactured by using an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the terminal 100 may include one or N displays 194, where N is a positive integer greater than 1.

The terminal 100 may implement a photographing function by using the ISP, the camera 193, the video codec, the GPU, the display 194, the application processor, and the like.

The ISP is configured to process data fed back by the camera 193. For example, during photographing, when a shutter is open, light is transmitted to a photosensitive element of the camera through a lens. An optical signal is converted to an electrical signal. The photosensitive element of the camera transmits the electrical signal to the ISP for processing, and converts the electrical signal to a visible image. The ISP may further perform algorithm optimization on noise and brightness of the image. The ISP may further optimize parameters such as exposure and a color temperature of a photographing scenario. In some embodiments, the ISP may be disposed in the camera 193.

The camera 193 is configured to acquire a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal to an electrical signal, and then transmits the electrical signal to the ISP, so that the electrical signal is converted to a digital image signal. The ISP outputs the digital image signal to the DSP for processing. The DSP converts the digital image signal to an image signal in a standard format like RGB or YUV. In some embodiments, the terminal 100 may include one or N cameras 193, where N is a positive integer greater than 1.

The digital signal processor is configured to process a digital signal. In addition to processing a digital image signal, the digital signal processor may also process other digital signals. For example, when the terminal 100 selects a frequency, the digital signal processor is configured to perform Fourier transform on frequency energy.

The video codec is configured to compress or decompress a digital video. The terminal 100 may support one or more types of video codecs. In this way, the terminal 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and can continuously perform self-learning. Applications such as intelligent cognition of the terminal 100, for example, image recognition, facial recognition, speech recognition, and text understanding, may be implemented through the NPU.

The external memory interface 120 may be configured to connect to an external storage card, for example, a micro SD card, to extend a storage capability of the terminal 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 runs the instructions stored in the internal memory 121, to execute various function applications of the terminal 100 and data processing. The internal memory 121 may include a program storage area and a data storage area. The program storage area may store an operating system, an application required by at least one function (for example, a sound playing function or an image playing function), and the like. The data storage area may store data (such as audio data and an address book) created when the terminal 100 is used, and the like. In addition, the internal memory 121 may include a highspeed random access memory, and may further include a nonvolatile memory, for example, at least one magnetic disk storage device, a flash storage device, or a universal flash storage (universal flash storage, UFS).

The terminal 100 may implement an audio function such as music playing or recording by using the audio module 170, the speaker 170A, the receiver 170B, the microphone 170C, the headset jack 170D, the application processor, and the like.

The audio module 170 is configured to convert digital audio information to an analog audio signal for output, and is also configured to convert an analog audio input to a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an electrical audio signal to a sound signal. The terminal 100 may be configured to listen to music or answer a call in a hands-free mode over the speaker 170A.

The receiver 170B, also referred to as an "earpiece", is configured to convert an electrical audio signal to a sound signal. When a call is answered or voice information is received by using the terminal 100, the receiver 170B may be put close to a human ear to listen to a voice.

The microphone 170C, also referred to as a "mike" or a "mic", is configured to convert a sound signal to an electrical signal. When making a call or sending speech information, a user may place the mouth of the user near the microphone 170C to make a sound, to input a sound signal to the microphone 170C. At least one microphone 170C may be disposed in the terminal 100. In some other embodiments, two microphones 170C may be disposed in the terminal 100, to collect a sound signal and further implement a noise cancellation function. In some other embodiments, three, four, or more microphones 170C may be disposed in the terminal 100, to collect a sound signal, implement noise cancellation, identify a sound source, implement a directional recording function, and the like.

The headset jack 170D is configured to connect to a wired headset. The headset jack 170D may be the USB port 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal to an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates including conductive materials. When a force is applied to the pressure sensor 180A, capacitance between electrodes changes. The terminal 100 determines pressure intensity based on a capacitance change. When a touch operation is performed on the display 194, the terminal 100 detects intensity of the touch operation by using the pressure sensor 180A. The terminal 100 may also calculate a touch position based on a detection signal of the pressure sensor 180A. In some embodiments, touch operations that are performed at a same touch position but have different touch intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating an SMS message is performed.

The gyro sensor 180B may be configured to determine a moving posture of the terminal 100. In some embodiments, angular velocities of the terminal 100 around three axes (namely, x, y, and z axes) may be determined by using the gyro sensor 180B. The gyro sensor 180B may be configured to implement image stabilization during photographing. For example, when the shutter is pressed, the gyro sensor 180B detects an angle at which the terminal 100 jitters, calculates, based on the angle, a distance for which a lens module needs to compensate, and allows the lens to cancel jitter of the terminal 100 through reverse motion, to implement image stabilization. The gyro sensor 180B may be further used in a navigation scenario and a motion-sensing gaming scenario.

The barometric pressure sensor 180C is configured to measure barometric pressure. In some embodiments, the terminal 100 calculates an altitude based on a value of barometric pressure measured by the barometric pressure sensor 180C, to assist in positioning and navigation.

The magnetic sensor 180D includes a Hall sensor. The terminal 100 may detect opening and closing of a flip cover by using the magnetic sensor 180D. In some embodiments, when the terminal 100 is a flip phone, the terminal 100 may detect opening and closing of a flip cover by using the magnetic sensor 180D. Further, a feature like automatic unlocking upon opening is set based on a detected opening or closing state of the flip cover or a clamshell.

The acceleration sensor 180E may detect accelerations in various directions (usually on three axes) of the terminal 100. When the terminal 100 is still, a magnitude and a direction of gravity may be detected. The acceleration sensor 180E may be further configured to identify a posture of the electronic device, and is applied to applications such as a pedometer and switching between a landscape mode and a portrait mode.

The distance sensor 180F is configured to measure a distance. The terminal 100 may measure a distance by using infrared or laser. In some embodiments, in a photographing scenario, the terminal 100 may measure a distance by using the distance sensor 180F to implement quick focusing.

The optical proximity sensor 180G may include, for example, a light-emitting diode (LED) and an optical detector, for example, a photodiode. The light-emitting diode may be an infrared light-emitting diode. The terminal 100 may emit infrared light by using the light-emitting diode. The terminal 100 detects reflected infrared light from a nearby object by using the photodiode. When sufficient reflected light is detected, it can be determined that there is an object near the terminal 100. When insufficient reflected light is detected, the terminal 100 can determine that there is no object near the terminal 100. The terminal 100 may detect, by using the optical proximity sensor 180G, that the user holds the terminal 100 close to an ear for a call, to automatically turn off a screen for power saving. The optical proximity sensor 180G may also be used in a flip cover mode or a pocket mode to automatically unlock or lock a screen.

The ambient light sensor 180L is configured to sense ambient light brightness. The terminal 100 may adaptively adjust luminance of the display 194 based on sensed ambient light brightness. The ambient light sensor 180L may also be configured to automatically adjust white balance during photographing. The ambient light sensor 180L may further cooperate with the optical proximity sensor 180G to detect whether the terminal 100 is in a pocket to prevent an accidental touch.

The fingerprint sensor 180H is configured to collect a fingerprint. The terminal 100 may implement fingerprint unlocking, application lock access, fingerprint-based photographing, fingerprint-based call answering, and the like by using a feature of the collected fingerprint.

The temperature sensor 180J is configured to detect a temperature. In some embodiments, the terminal 100 executes a temperature processing policy based on a temperature detected by the temperature sensor 180J. For example, when the temperature reported by the temperature sensor 180J exceeds a threshold, the terminal 100 degrades performance of a processor near the temperature sensor 180J, to reduce power consumption and implement thermal protection. In other embodiments, when the temperature is lower than another threshold, the terminal 100 heats the battery 142, to avoid an abnormal shutdown of the terminal 100 caused by a low temperature. In some other embodiments, when the temperature is less than still another threshold, the terminal 100 boosts an output voltage of the battery 142 to avoid an abnormal shutdown caused by a low temperature.

The touch sensor 180K is also referred to as a "touch panel". The touch sensor 180K may be disposed on the display 194, and the touch sensor 180K and the display 194 constitute a touchscreen, which is referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In other embodiments, the touch sensor 180K may be alternatively disposed on a surface of the terminal 100, and is located in a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, and receive a blood pressure beating signal. In some embodiments, the bone conduction sensor 180M may alternatively be disposed in a headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal 100 may receive a button input, and generate a button signal input related to a user setting and function control of the terminal 100.

The motor 191 may generate a vibration prompt. The motor 191 may be configured to produce an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, time reminding, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the terminal 100. The terminal 100 may support one or N SIM card interfaces, where N is a positive integer greater than 1. The SIM card interface 195 may support a nano-SIM card, a micro-SIM card, a SIM card, and the like. A plurality of cards may be simultaneously inserted into one SIM card interface 195. The plurality of cards may be of a same type, or may be of different types. Different types of SIM cards are compatible in the SIM card interface 195. The SIM card interface 195 is also compatible with an external storage card. The terminal 100 interacts with a network by using the SIM card, to implement functions such as calling and data communication. In some embodiments, the terminal 100 uses an eSIM, that is, an embedded SIM card. The eSIM card may be embedded in the terminal 100, and cannot be separated from the terminal 100.

The following describes a protocol encapsulation architecture for outbound data of a BeiDou communication system 10 according to an embodiment of this application.

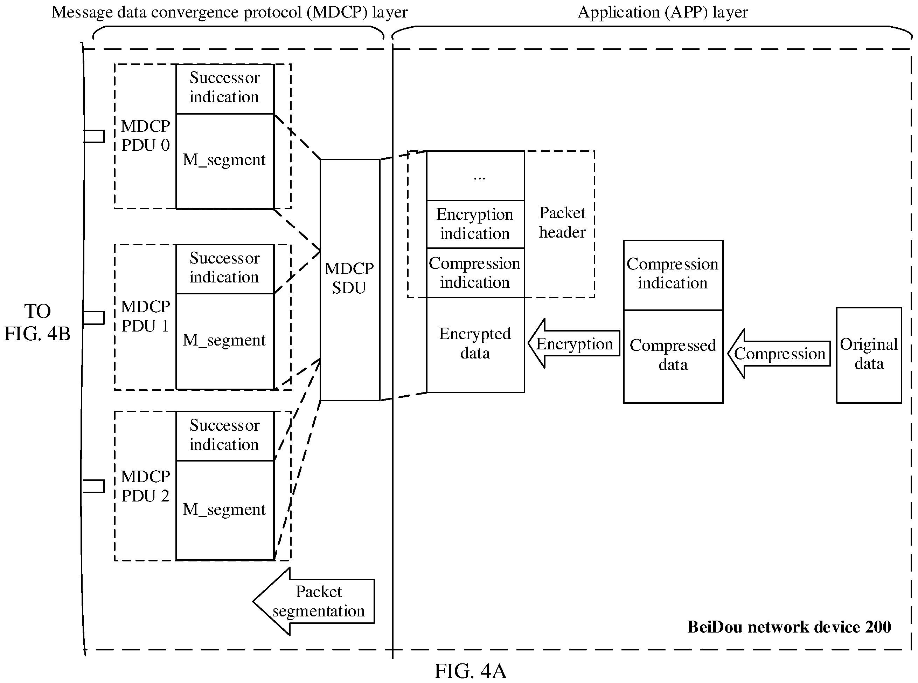

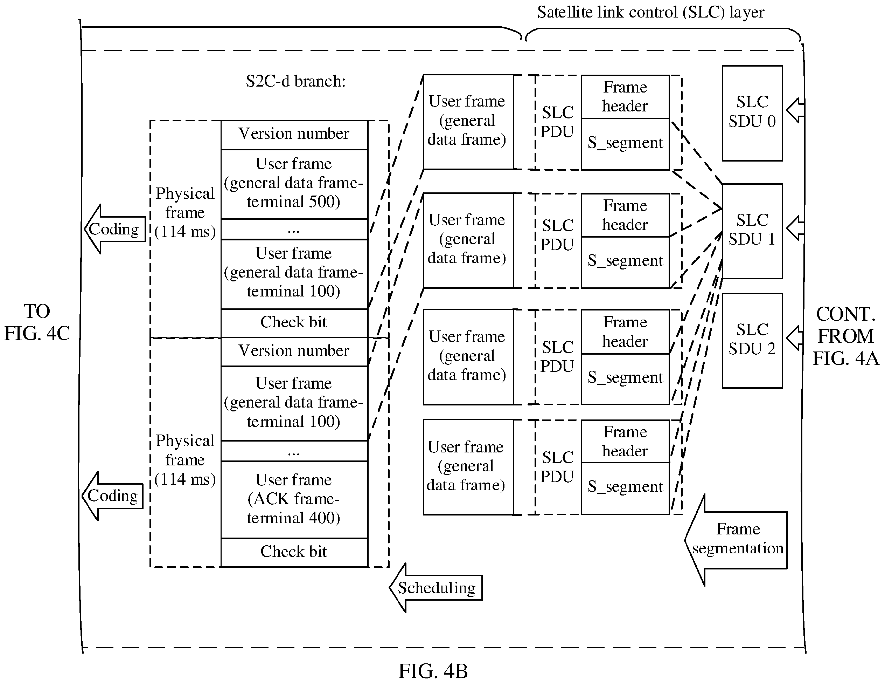

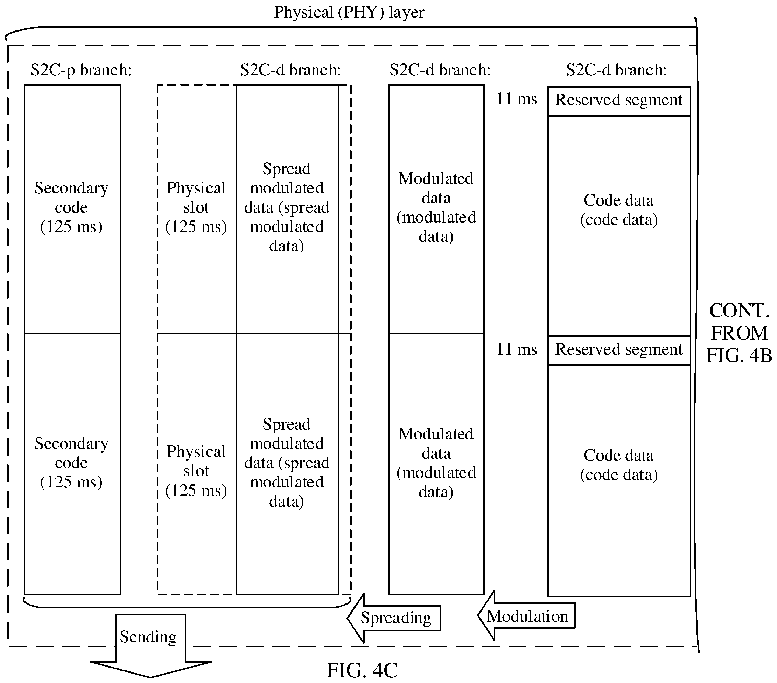

FIG. 4A, FIG. 4B, and FIG. 4C are a diagram of a protocol encapsulation architecture for the outbound data of the BeiDou communication system 10 according to an embodiment of this application.

As shown in FIG. 4A, FIG. 4B, and FIG. 4C, BeiDou short message transmission protocol layers in a BeiDou network device 200 may include an application (application layer protocol, APP) layer, a message data convergence protocol (message data convergence protocol, MDCP) layer, a satellite link control (satellite link control protocol, SLC) layer, and a physical (physical layer protocol, PHY) layer. The BeiDou network device 200 may include a BeiDou ground transceiver station 22, a BeiDou central station 23, and a BeiDou short message integrated communication platform 24. The BeiDou ground transceiver station 22 may be responsible for protocol processing at the PHY layer. The BeiDou central station 23 may be responsible for protocol processing at the SLC layer and the MDCP layer. The BeiDou short message integrated communication platform 24 may be responsible for protocol processing at the APP layer.

When the BeiDou network device 200 sends data to the terminal 100, a working procedure of the BeiDou short message transmission protocol in the BeiDou network device 200 may be as follows.

At the APP layer, the BeiDou network device 200 may compress original data into compressed data according to a compression algorithm, and add a compression indication field before the compressed data. The compression indication field may indicate a compression algorithm type of the compressed data. Then, the BeiDou network device 200 may encrypt the compressed data to obtain encrypted data, and add an encryption algorithm field to a header of the encrypted data. The encryption algorithm field indicates an encryption algorithm type of the encrypted data. The BeiDou network device 200 may encapsulate the encrypted data, the compression indication field, and the encryption indication field into an application layer packet, and deliver the application layer packet to the MDCP layer. The application layer packet may include a packet header and packet data. The packet header may include the compression indication field, the encryption indication field, and the like. The packet data includes the encrypted data.

Optionally, the BeiDou network device 200 may alternatively encrypt the compression indication field and the compressed data together, to obtain the encrypted data.

At the MDCP layer, the BeiDou network device 200 may obtain, through an inter-layer interface, the application layer packet delivered by the APP layer, where the application layer packet is used as an MDCP SDU. At the MDCP layer, the BeiDou network device 200 may segment one MDCP SDU into one or more pieces of fixed-length MDCP segment data (M_segement), and add a successor indication field to a header of each piece of MDCP segment data, to obtain an MDCP PDU. In other words, the MDCP PDU includes the M_segement and the successor indication field. The successor indication field may indicate that a current MDCP PDU is a start MDCP PDU, an intermediate MDCP PDU, or a last MDCP PDU among a plurality of consecutively sent MDCP PDUs, or is one separately sent MDCP PDU.

At the SLC layer, the BeiDou network device 200 may obtain, through an inter-layer interface, the MDCP PDU delivered by the MDCP layer, where the MDCP PDU is used as an SLC SDU. At the SLC layer, the BeiDou network device 200 may segment the SLC SDU into one or more (for example, a maximum of four) pieces of fixed-length SLC segment data (S_segement), and add frame header information to a header of each piece of S_segement, to obtain an SLC PDU.

Herein, it may be understood that, to adapt to a frame length of the physical layer, the SLC layer needs to segment data. According to the SLC layer design, one SLC SDU can be segmented into a maximum of four SLC PDUs. Therefore, the MDCP layer also needs to segment data.

At the PHY layer, the BeiDou network device 200 may obtain, through an inter-layer interface, the SLC PDU delivered by the SLC layer. The BeiDou network device 200 may obtain SLC PDUs of one or more users from the SLC layer. The BeiDou network device 200 may splice SLC PDUs of a plurality of users together, and add a frame header (for example, a version number) of a physical frame, to form a code block (code block) of the PHY layer. A check bit (for example, a cyclic redundancy check (cyclic redundancy check, CRC) code) is added to a tail of the code block, and encoding (for example, polar encoding) is performed on the code block and the CRC code. An encoded physical frame and a reserved segment may form code data in a satellite-to-consumer data (satellite-to-consumer data, S2C-d) channel (data channel for short) with a fixed-length physical slot. The BeiDou network device 200 may separately place a plurality of SLC PDUs of one user into different physical frames. Then, the BeiDou network device 200 combines the code data of the S2C-d channel branch and pilot information of a satellite-to-consumer pilot (satellite-to-consumer pilot, S2C-p) channel (pilot channel for short) into pilot code data, namely, outbound data. The BeiDou network device 200 may send the outbound data to a BeiDou short message satellite 21, and the BeiDou short message satellite 21 relays and forwards the outbound data to the terminal 100.

It may be understood that the pilot information of the S2C-p channel branch is related to a satellite beam. When a satellite beam number is known information, the pilot information of the S2C-p channel branch is also known and does not need to be decoded. However, the code data of the S2C-d channel branch needs to be decoded. A center frequency and a bandwidth of the S2C-p channel are the same as those of the S2C-d channel, and a signal on the S2C-p channel is orthogonal to a signal on the S2C-d channel branch.

**The following describes a protocol parsing architecture for outbound data of a BeiDou communication system 10 according to an embodiment of this application.**

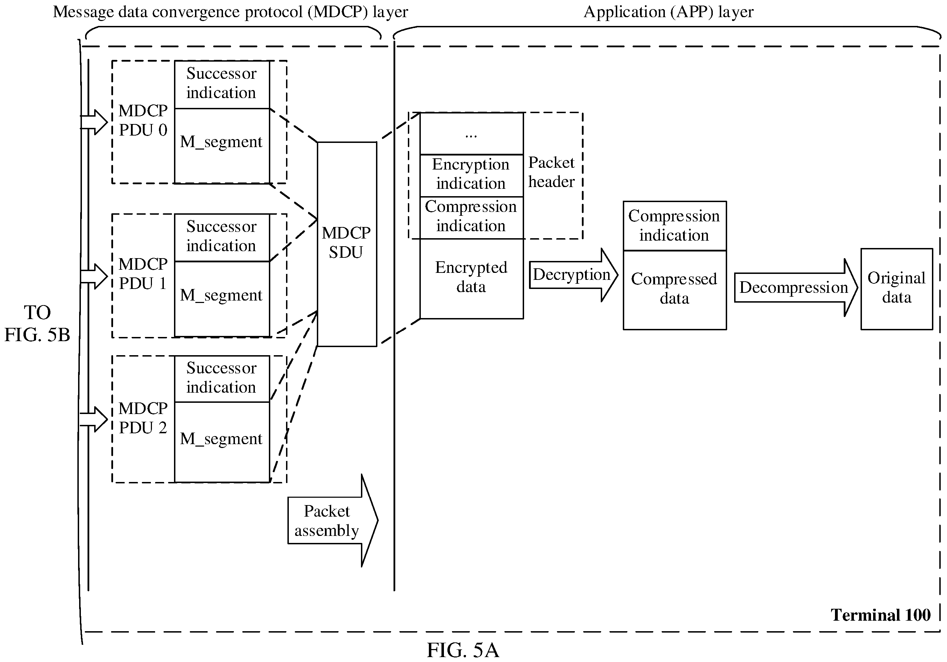

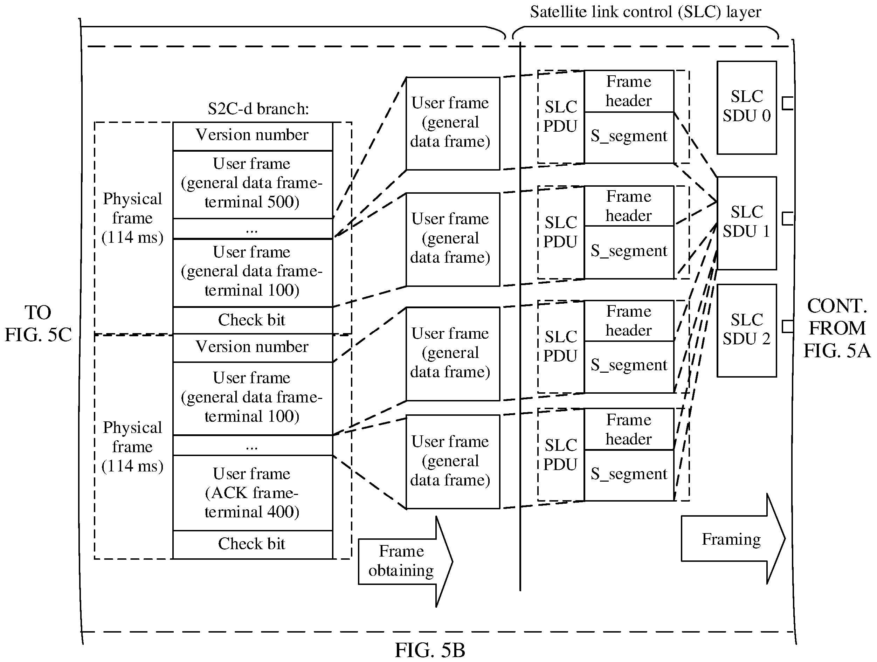

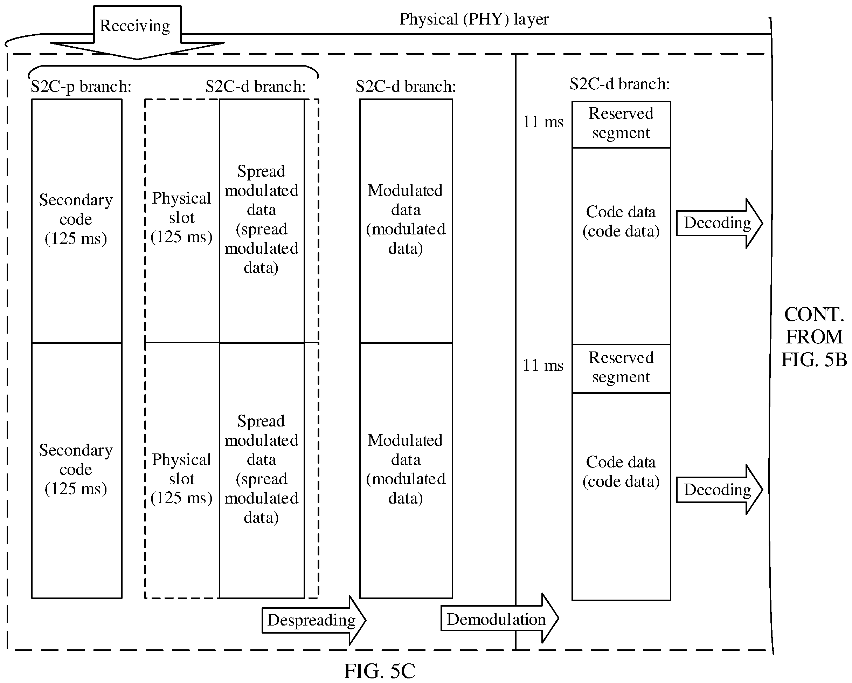

FIG. 5A, FIG. 5B, and FIG. 5C are a diagram of a protocol parsing architecture for the outbound data of the BeiDou communication system 10 according to an embodiment of this application.

As shown in FIG. 5A, FIG. 5B, and FIG. 5C, BeiDou short message transmission protocol layers in a terminal 100 may be divided into an application (application layer protocol, APP) layer, a message data convergence protocol (message data convergence protocol, MDCP) layer, a satellite link control (satellite link control protocol, SLC) layer, and a physical (physical layer protocol, PHY) layer.

When the terminal 100 receives data sent by the BeiDou network device, a working procedure of the BeiDou short message transmission protocol layers of the terminal 100 may be as follows.

At the PHY layer, the terminal 100 may obtain modulated and spread pilot code data sent by a BeiDou network device 200. The terminal 100 may despread the received spread modulated data (spread+modulated data), to obtain modulated data (modulated data). Then, the terminal 100 may demodulate the modulated data to obtain pilot code data (pilot+data). Then, the terminal 100 may remove pilot information from the pilot code data to obtain code data (code data). Then, the terminal 100 may decode the code data, and verify integrity of a code block (code block) by using check data in a check bit field. If the code block is complete, the terminal 100 may extract the code block (code block), and deliver the code block to the SLC layer through an inter-layer interface, where the code block is used as an SLC PDU of the SLC layer.

Herein, the pilot code data is outbound data sent by the BeiDou network device 200, and the outbound data includes code data of an S2C-d channel and pilot information of an S2C-p channel.

At the SLC layer, the terminal 100 may splice, based on frame header information of SLC PDUs, SLC PDUs that belong to a same SLC SDU into one SLC SDU. The terminal 100 may deliver the SLC SDU to the MDCP layer through an inter-layer interface, where the SLC SDU is used as an MDCP PDU of the MDCP layer.

At the MDCP layer, the terminal 100 may splice all MDCP PDUs belonging to a same MDCP SDU into one MDCP SDU. The terminal 100 may deliver the MDCP SDU to the APP layer through an inter-layer interface, where the MDCP SDU is used as an application layer packet received by the APP layer.

At the APP layer, the terminal 100 may decrypt and decompress the application layer packet based on a packet header of the application layer packet, to obtain original data.

In this embodiment of this application, the foregoing protocol processing process is merely an example for description, and a specific operation of protocol processing is not limited in this application.

The following describes a satellite signal acquisition process in the BeiDou communication system in embodiments of this application.

Both a radio navigation satellite service (radio navigation satellite service, RNSS) and a radio determination satellite service (radio determination satellite service, RDSS) are integrated in a navigation satellite and an operation control application system of a satellite navigation system. The RNSS is used to measure a position of a user, and calculate a speed and a route parameter. The RDSS can integrate positioning, timing, and communication. A same navigation system and signal format are used for the RNSS and the RDSS in a same time system. The BeiDou communication system 10 supports both the RNSS service and the RDSS service, to implement short message communication.

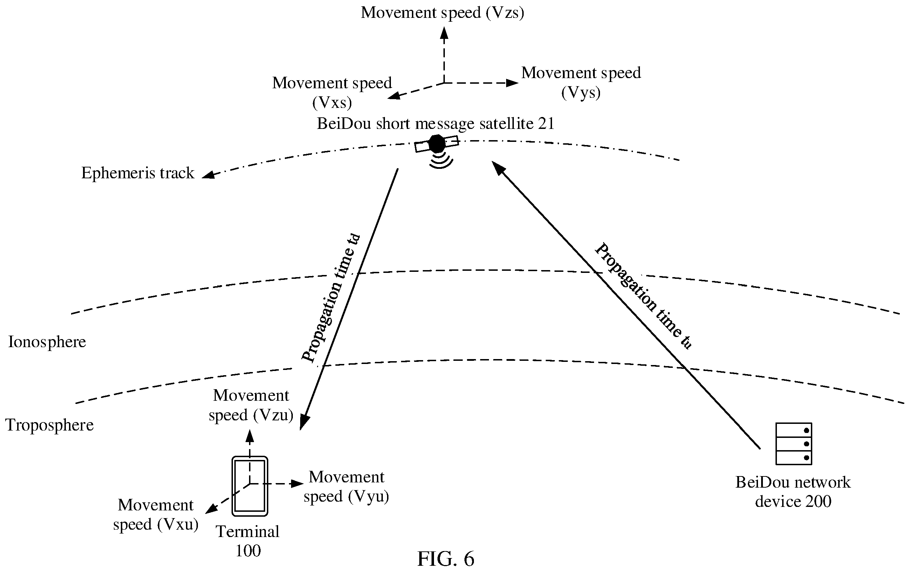

As shown in FIG. 6, the BeiDou network device 200 may forward an RDSS outbound signal to the terminal 100 through a BeiDou short message satellite 21. The BeiDou short message satellite 21 may be a GEO satellite. When the RDSS outbound signal is sent from the BeiDou network device 200 to the BeiDou short message satellite 21, the RDSS outbound signal needs to sequentially pass through a troposphere and an ionosphere. When the RDSS outbound signal is forwarded from the BeiDou short message satellite 21 to the terminal 100, the RDSS outbound signal needs to sequentially pass through the ionosphere and the troposphere. The RDSS outbound signal may include a pilot signal of an S2C-p channel branch. The pilot signal of the S2C-p channel branch is sent continuously and periodically. The terminal 100 may track a satellite beam by acquiring the pilot signal that is on the S2C-p channel branch and that is forwarded by the BeiDou short message satellite 21. A period of a secondary code in the pilot signal of the S2C-p channel branch in the outbound data may be fixed duration (for example, 125 ms). A spreading code sequence used in the secondary code may be a code sequence obtained by truncating a gold code sequence generated by two 13-bit shift registers to a specified length (for example, 8,000 bits). Period duration of the spreading code sequence may be 1 ms.

However, when acquiring the RDSS outbound signal, the terminal 100 needs to perform correlation peak calculation by using a locally generated spreading code sequence sample and a spreading code sequence of the received RDSS outbound signal. After each time of calculation, the terminal 100 needs to adjust a chip phase of the locally generated spreading code sequence, for correlation peak calculation again with the received RDSS outbound signal, until a correlation peak calculation result meets an acquisition condition, that is, acquisition of the RDSS outbound signal is completed.

A propagation time at which the BeiDou network device 200 sends the outbound data to the BeiDou short message satellite 21 is tu, and a propagation time at which the BeiDou short message satellite 21 forwards the outbound data to the terminal 100 is td. A velocity component of a movement speed of the BeiDou short message satellite 21 in a three-dimensional coordinate system is (Vxs, Vys, Vzs), and a velocity component of the terminal 100 in the three-dimensional coordinate system is (Vxu, Vyu, Vzu).

Because the spreading code sequence used by the RDSS outbound signal has a long length and a high bit rate, a propagation delay exists in the process in which the BeiDou network device 200 propagates the RDSS outbound signal to the terminal 100 through the BeiDou short message satellite 21. The propagation delay of the RDSS outbound signal causes expansion of a range of the chip phase of the spreading code sequence adjusted by the terminal 100. As a result, it takes a long time for the terminal 100 to acquire the RDSS outbound signal.

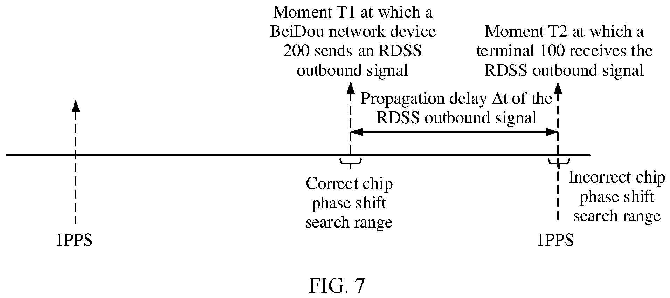

As shown in FIG. 7, the secondary code in the RDSS outbound signal sent by the BeiDou network device 200 and the spreading code sequence used in the secondary code are known to the terminal 100. The terminal 100 may open an acquisition channel at a moment T2 to receive the RDSS outbound signal forwarded by the BeiDou short message satellite 21. However, due to a propagation delay Δt of the RDSS outbound signal, the RDSS outbound signal received by the terminal 100 at the moment T2 is actually sent by the BeiDou network device 200 at a moment T1. In other words, a chip phase shift occurs between the RDSS outbound signal received by the terminal 100 at the moment T2 and the RDSS outbound signal sent by the BeiDou network device 200 at the moment T2. If the terminal 100 still performs correlation peak calculation based on the RDSS outbound signal sent by the BeiDou network device 200 at the moment T2 and the RDSS outbound signal that can be received by the terminal 100 at the moment T2, it is highly likely that the terminal 100 takes a long time to acquire the RDSS outbound signal, even fails to acquire the signal.

In addition, due to factors such as movement of both the BeiDou short message satellite 21 and the terminal 100 and a crystal oscillator frequency deviation, a frequency at which the terminal 100 receives the RDSS outbound signal and an actual frequency at which the BeiDou network device 200 sends the RDSS outbound signal are inconsistent. Consequently, a frequency range in which the terminal 100 searches for the RDSS outbound signal is expanded. As a result, it takes a long time for the terminal 100 to acquire the RDSS outbound signal.

Therefore, embodiments of this application provide a satellite signal acquisition method. The terminal 100 may receive a navigation message (including an ephemeris parameter, a 1PPS pulse, an ionospheric parameter, and the like) broadcast by the BeiDou short message satellite 21 by using an RNSS signal, and determine a time $t_u$ for propagating the RDSS outbound signal from the BeiDou network device 200 to the BeiDou short message satellite 21, a time $t_d$ for propagating the RDSS outbound signal from the BeiDou short message satellite 21 to the terminal 100, and a doppler shift $fd_1$ of the RDSS outbound signal from the BeiDou short message satellite 21 to the terminal 100. Further, the terminal 100 may determine the phase shift of the chip in the propagation process of the RDSS outbound signal and the receiving frequency $f_r$ of the RDSS outbound signal. The terminal 100 may acquire the RDSS outbound signal based on the phase shift of the chip in the propagation process of the RDSS outbound signal and the receiving frequency $f_r$ of the RDSS outbound signal. In this way, the terminal 100 can quickly acquire the RDSS outbound signal.

The following describes a satellite signal acquisition method according to an embodiment of this application.

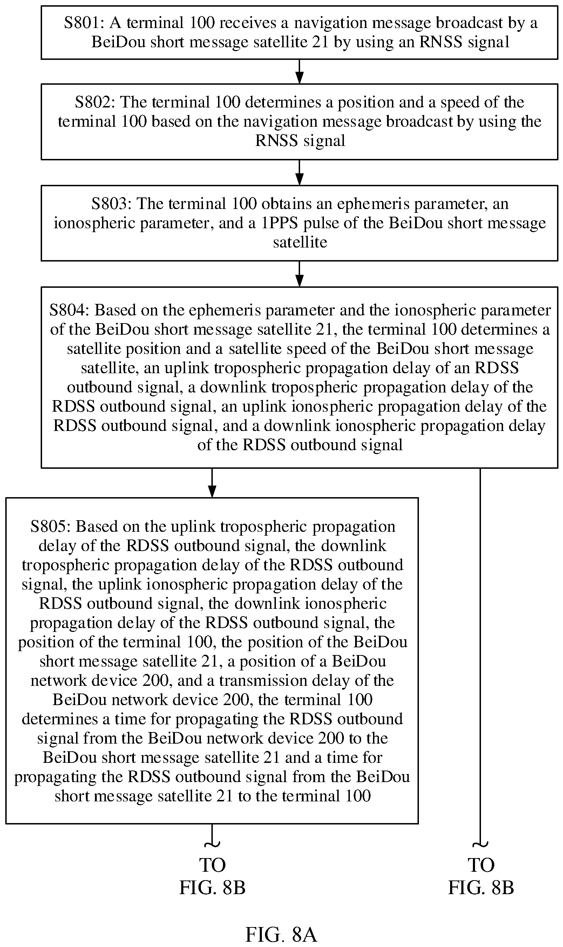

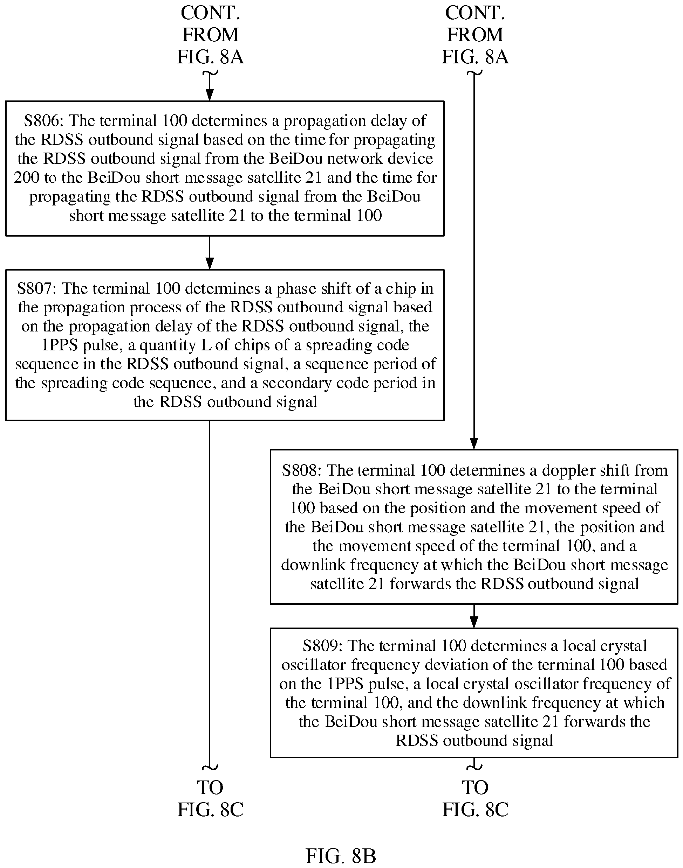

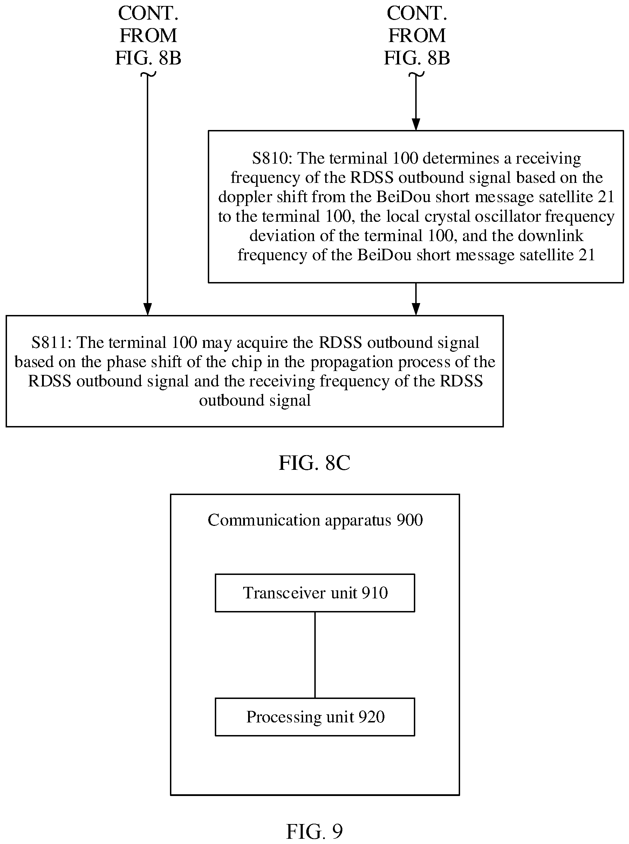

FIG. 8A, FIG. 8B, and FIG. 8C are a schematic flowchart of a satellite signal acquisition method according to an embodiment of this application.

As shown in FIG. 8A, FIG. 8B, and FIG. 8C, the method may include the following steps.

S801: A terminal 100 receives a navigation message broadcast by a BeiDou short message satellite 21 by using an RNSS signal.

The navigation message may include an ephemeris parameter, an ionospheric parameter, a time synchronization parameter, a satellite clock correction parameter, calendar data, a navigation service parameter, and the like of the BeiDou short message satellite. The time synchronization parameter includes a 1PPS pulse. The ionospheric parameter includes an ionospheric propagation delay of the RNSS signal, for example, an ionospheric delay of a BeiDou navigation system B1L frequency.

S802: The terminal 100 determines a position and a speed of the terminal 100 based on the navigation message broadcast by using the RNSS signal.

After receiving the navigation message broadcast by using the RNSS signal, the terminal 100 may synchronize a clock to clocks of the BeiDou short message satellite 21 and the BeiDou network device 200 based on the time synchronization parameter and the satellite clock correction parameter in the navigation message. After clock synchronization, the terminal 100 may perform positioning on the terminal 100 based on the plurality of parameters obtained by parsing the navigation message, to determine the position and the speed of the terminal 100.

Optionally, the terminal 100 may predict the ephemeris parameter and the ionospheric parameter of the BeiDou short message satellite 21 by using a precise global navigation satellite system (precise GNSS, PGNSS).

S803: The terminal 100 obtains the ephemeris parameter, the ionospheric parameter, and the 1PPS pulse of the BeiDou short message satellite 21.

After receiving the navigation message broadcast by the BeiDou short message satellite 21 by using the RNSS signal, the terminal 100 may obtain the ephemeris parameter, the ionospheric parameter, the time synchronization parameter, and the like of the BeiDou short message satellite 21 by parsing the navigation message. The time synchronization parameter includes the 1PPS pulse.

S804: Based on the ephemeris parameter and the ionospheric parameter of the BeiDou short message satellite, the terminal 100 determines a satellite position and a satellite speed of the BeiDou short message satellite, an uplink tropospheric propagation delay $t_{trop-u}$ of an RDSS outbound signal, a downlink tropospheric propagation delay $t_{trop-d}$ of the RDSS outbound signal, an uplink ionospheric propagation delay $t_{i-u}$ of the RDSS outbound signal, and a downlink ionospheric propagation delay $t_{i-d}$ of the RDSS outbound signal.

The ephemeris parameter describes information about a satellite movement orbit. The terminal 100 may determine the satellite position and the satellite speed of the BeiDou short message satellite 21 based on the ephemeris parameter of the BeiDou short message satellite 21 and a synchronized local clock time.

After determining the satellite position of the BeiDou short message satellite 21, the terminal 100 may determine a downlink tropospheric propagation delay of the RNSS signal based on the position of the terminal 100, the satellite position of the BeiDou short message satellite 21, and a preset tropospheric propagation delay model. Because a troposphere has approximately consistent impact on the RNSS signal and the RDSS outbound signal, the terminal 100 may determine the downlink tropospheric propagation delay of the RNSS signal as the downlink tropospheric propagation delay $t_{trop-d}$ of the RDSS signal. The terminal 100 may determine an uplink tropospheric propagation delay $t_{trop-u}$ of the RDSS signal based on the position of the BeiDou network device 200, the satellite position of the BeiDou short message satellite 21, and the preset tropospheric propagation delay model.

Because the ionospheric parameter includes the ionospheric propagation delay of the RNSS signal (for example, an ionospheric delay of a B1L frequency in the BeiDou navigation system), an ionosphere has inconsistent impact on the RNSS signal and the RDSS outbound signal. However, an ionospheric propagation delay of the RDSS outbound signal may be converted from an ionospheric delay of the RNSS signal. The ionospheric propagation delay of the RDSS outbound signal includes the uplink ionospheric propagation delay $t_{i-u}$ of the RDSS outbound signal on a transmission path from the BeiDou network device 200 to the BeiDou short message satellite 21 and the downlink ionospheric propagation delay $t_{i-d}$ of the RDSS outbound signal on a transmission path from the BeiDou short message satellite 21 to the terminal 100.

The uplink ionospheric propagation delay $t_{i-u}$ of the RDSS outbound signal may be determined according to the following Formula (1):

$$t_{i-u} = a * t_i \qquad\qquad \text{Formula (1)}$$

In Formula (1), $t_{i-u}$ is the uplink ionospheric propagation delay of the RDSS outbound signal, $t_i$ is the ionospheric propagation delay of the RNSS signal (for example, the ionospheric delay of the B1L frequency in the BeiDou navigation system), and $a$ is a conversion coefficient. For example, based on test data, a value of $a$ may be 0.0625.

The downlink ionospheric propagation delay $t_{i-d}$ of the RDSS outbound signal may be determined according to the following Formula (2):

$$t_{i-d} = b * t_i \qquad\qquad \text{Formula (2)}$$

In Formula (2), $t_{i-d}$ is the downlink ionospheric propagation delay of the RDSS outbound signal, $t_i$ is the ionospheric propagation delay of the RNSS signal (for example, the ionospheric delay of the B1L frequency in the BeiDou navigation system), and $b$ is a conversion coefficient. For example, based on test data, a value of $b$ may be 0.4.

S805: Based on the downlink tropospheric propagation delay $t_{trop-u}$ of the RDSS outbound signal, the downlink tropospheric propagation delay $t_{trop-d}$ of the RDSS outbound signal, the uplink ionospheric propagation delay $t_{i-u}$ of the RDSS outbound signal, the downlink ionospheric propagation delay $t_{i-d}$ of the RDSS outbound signal, the position of the terminal 100, the position of the BeiDou short message satellite 21, the position of the BeiDou network device 200, and a transmission delay $t_c$ of the BeiDou network device 200, the terminal 100 determines a time $t_u$ for propagating the RDSS outbound signal from the BeiDou network device 200 to the BeiDou short message satellite 21 and a time $t_d$ for propagating the RDSS outbound signal from the BeiDou short message satellite 21 to the terminal 100.

When the BeiDou network device 200 includes the BeiDou ground transceiver station 22, the BeiDou central station 23, and the BeiDou short message integrated communication platform 24 shown in FIG. 1, the position of the BeiDou network device 200 may be specifically a geographical position of a transmit antenna on the BeiDou ground transceiver station 22. The transmission delay $t_c$ of the BeiDou network device 200 may be specifically a delay between generation of the RDSS outbound signal by the BeiDou central station 23 and start of sending the RDSS outbound signal by the BeiDou ground transceiver station 22.

The position of the BeiDou network device 200 and the transmission delay $t_c$ of the BeiDou network device 200 may be preset on the terminal 100. Optionally, when the terminal 100 accesses a cellular network or a Wi-Fi network, the terminal 100 may access a BeiDou server through the cellular network or the Wi-Fi network, to obtain a latest position of the BeiDou network device 200 and the transmission delay $t_c$ of the BeiDou network device 200. Further, the latest position of the BeiDou network device 200 and the transmission delay $t_c$ of the BeiDou network device 200 are locally stored in the terminal 100.

The time $t_u$ for propagating the RDSS outbound signal from the BeiDou network device 200 to the BeiDou short message satellite 21 may be determined according to the following Formula (3):

$$t_u = \frac{\sqrt{(x_c - x_s)^2 + (y_c - y_s)^2 + (z_c - z_s)^2}}{c} + t_c + t_{trop-u} + t_{i-u} \qquad \text{Formula (3)}$$

In Formula (3), $t_u$ is the time for propagating the RDSS outbound signal from the BeiDou network device 200 to the BeiDou short message satellite 21, $x_c$, $y_c$, and $z_c$ are position coordinates of the BeiDou network device 200 at a moment T in a three-dimensional coordinate system (an x axis, a y axis, and a z axis), $x_s$ $y_s$, and $z_s$ are position coordinates of the BeiDou short message satellite 21 at the moment T in the three-dimensional coordinate system (the x axis, the y axis, and the z axis), $t_c$ is the transmission delay of the BeiDou network device 200, $t_{trop-u}$ is the uplink tropospheric propagation delay of the RDSS outbound signal, $t_{i-u}$ is the uplink ionospheric propagation delay of the RDSS outbound signal, and $c$ is a propagation speed of an electromagnetic wave, namely, a speed of light. The moment T may be a moment at which the terminal 100 triggers the process of acquiring the RDSS outbound signal.

The time $t_d$ for propagating the RDSS outbound signal from the BeiDou short message satellite 21 to the terminal 100 may be determined according to Formula (4):

$$t_d = \frac{\sqrt{(x_u - x_s)^2 + (y_u - y_s)^2 + (z_u - z_s)^2}}{c} + t_{trop-d} + t_{i-d} \qquad \text{Formula (4)}$$

In Formula (4), $t_d$ is the time for propagating the RDSS outbound signal from the BeiDou short message satellite 21 to the terminal 100, $x_u$, $y_u$, and $z_u$ are position coordinates of the terminal 100 at a moment T in a three-dimensional coordinate system (an x axis, a y axis, and a z axis), $x_s$, $y_s$, and $z_s$ are position coordinates of the BeiDou short message satellite 21 at the moment T in the three-dimensional coordinate system (the x axis, the y axis, and the z axis), $t_{trop-d}$ is the downlink tropospheric propagation delay of the RDSS outbound signal, $t_{i-d}$ is the downlink ionospheric propagation delay of the RDSS outbound signal, and c is a propagation speed of an electromagnetic wave, namely, a speed of light. The moment T may be a moment at which the terminal 100 triggers the process of acquiring the RDSS outbound signal.

S806: The terminal 100 determines a propagation delay $\Delta t$ of the RDSS outbound signal based on the time $t_u$ for propagating the RDSS outbound signal from the BeiDou network device 200 to the BeiDou short message satellite 21 and the time $t_d$ for propagating the RDSS outbound signal from the BeiDou short message satellite 21 to the terminal 100.

The propagation delay $\Delta t$ of the RDSS outbound signal may be determined according to the following Formula (5):

$$\Delta t = t_u + t_d \qquad \text{Formula (5)}$$

In Formula (5), $\Delta t$ is the propagation delay of the RDSS outbound signal, $t_u$ is the time for propagating the RDSS outbound signal from the BeiDou network device 200 to the BeiDou short message satellite 21, and $t_d$ is the time for propagating the RDSS outbound signal from the BeiDou short message satellite 21 to the terminal 100.

S807: The terminal 100 determines a phase shift of a chip in the propagation process of the RDSS outbound signal based on the propagation delay $\Delta t$ of the RDSS outbound signal, the 1PPS pulse, a quantity L of chips of a spreading code sequence of the RDSS outbound signal, a sequence period $T_m$ of the spreading code sequence, and a secondary code period $T_r$ in the RDSS outbound signal.

The propagation delay $\Delta t$ of the RDSS outbound signal, the sequence period $T_m$ of the spreading code sequence, and the secondary code period $T_r$ in the RDSS outbound signal are all in milliseconds (ms).

The phase shift may refer to an offset of an initial chip in time domain due to a propagation delay in the propagation process of the RDSS outbound signal. In this application, the phase shift offset may be specifically a quantity of offset chips.

Specifically, the terminal 100 may determine a millisecond count value msidx of the phase shift of the RDSS outbound signal in the propagation process according to the following Formula (6):

$$\text{msidx} = \left( \frac{1000}{T_r} * L * \frac{T_r}{T_m} - \Delta t * L \right) \% (L * \frac{T_r}{T_m}) / L \qquad \text{Formula (6)}$$

In Formula (6), msidx is the millisecond count value of the phase shift of the RDSS outbound signal in the propagation process; 1000 indicates that one 1PPS pulse includes 1,000 ms; $T_r$ is the secondary code period in the RDSS outbound signal, where for example, $T_r$ may be 125 ms; L is the quantity of chips of the spreading code sequence of the RDSS outbound signal, where for example, a value of L may be 8000; and $T_m$ is the sequence period of the spreading code sequence, where for example, a value of $T_m$ may be 1 ms.

The terminal 100 may determine the chip offset initChip for the phase shift of the RDSS outbound signal in the propagation process according to the following Formula (7):

$$\text{initChip} = \left( \frac{1000}{T_r} * L * \frac{T_r}{T_m} - \Delta t * L \right) \% \left( L * \frac{T_r}{T_m} \right) \% L \qquad \text{Formula (7)}$$

In Formula (7), initChip is the chip offset for the phase shift of the RDSS outbound signal in the propagation process; 1000 indicates that one 1PPS pulse includes 1,000 ms; $T_r$ is the secondary code period in the RDSS outbound signal, where for example, $T_r$ may be 125 ms; L is the quantity of chips of the spreading code sequence of the RDSS outbound signal, where for example, a value of L may be 8000; and $T_m$ is the sequence period of the spreading code sequence, where for example, a value of $T_m$ may be 1 ms.

S808: The terminal 100 determines a doppler shift $fd_1$ from the BeiDou short message satellite 21 to the terminal 100 based on the position and the movement speed of the BeiDou short message satellite 21, the position and the movement speed of the terminal 100, and a downlink frequency $f_s$ at which the BeiDou short message satellite 21 forwards the RDSS outbound signal.

The terminal 100 may determine a mirror velocity component $V_{rs}$ from the BeiDou short message satellite 21 to the terminal 100 based on the position and the movement speed of the BeiDou short message satellite 21 and the position and the movement speed of the terminal 100. The terminal 100 may determine the doppler shift $fd_1$ from the BeiDou short message satellite 21 to the terminal 100 based on the mirror velocity component $V_{rs}$ from the BeiDou short message satellite 21 to the terminal 100 and the downlink frequency $f_s$ at which the BeiDou short message satellite 21 forwards the RDSS outbound signal.

The mirror velocity component $V_{rs}$ from the BeiDou short message satellite 21 to the terminal 100 may be determined according to the following Formula (8):

$$V_{rs} = \frac{(V_{xu}-V_{xs})*(x_u-x_s)+(V_{yu}-V_{ys})*(y_u-y_s)+(V_{zu}-V_{zs})*(z_u-z_s)}{\sqrt{(x_u-x_s)^2+(y_u-y_s)^2+(z_u-z_s)^2}} \qquad \text{Formula (8)}$$

In Formula (8), $V_{rs}$ is the mirror velocity component from the BeiDou short message satellite 21 to the terminal 100, $V_{xs}$, $V_{ys}$, and $V_{zs}$ are respectively velocity components of the BeiDou short message satellite 21 in the three directions (the x axis, the y axis, and the z axis) in the three-dimensional coordinate system, $V_{xu}$, $V_{yu}$, and $V_{zu}$ are respectively velocity components of the terminal 100 in the three directions (the x axis, the y axis, and the z axis) in the three-dimensional coordinate system, $x_u$, $y_u$, and $z_u$ are the position coordinates of the terminal 100 at the moment T in the three-dimensional coordinate system (the x axis, the y axis, and the z axis), and $x_s$, $y_s$, and $z_s$ are the position coordinates of the BeiDou short message satellite 21 at the moment T in the three-dimensional coordinate system (the x axis, the y axis, and the z axis). The moment T may be the moment at which the terminal 100 triggers the process of acquiring the RDSS outbound signal.

The doppler shift $fd_1$ from the BeiDou short message satellite 21 to the terminal 100 may be determined according to the following Formula (9):

$$fd_1 = \frac{f_s * V_{rs}}{V_{rs} + C} \qquad \text{Formula (9)}$$

In Formula (9), $fd_1$ is the doppler shift from the BeiDou short message satellite 21 to the terminal 100, $V_{rs}$ is the mirror velocity component from the BeiDou short message satellite 21 to the terminal 100, and c is the propagation speed of the electromagnetic wave, namely, the speed of light.

S809: The terminal 100 determines a local crystal oscillator frequency deviation $fd_2$ of the terminal 100 based on the 1PPS pulse, a local crystal oscillator frequency $f_u$ of the terminal 100, and the downlink frequency $f_s$ at which the BeiDou short message satellite 21 forwards the RDSS outbound signal.

Specifically, after obtaining the 1PPS pulse, the terminal 100 may obtain a sum *offset* of differences between 1PPS pulse time count values and an expected value of a local crystal oscillator in a time t. The terminal 100 may determine the local crystal oscillator frequency deviation $fd_2$ of the terminal 100 based on the sum *offset* of differences between the 1PPS pulse time count values and the expected value in the time t, the local crystal oscillator frequency $f_u$ of the terminal 100, and the downlink frequency $f_s$ at which the BeiDou short message satellite 21 forwards the RDSS outbound signal.

For example, in 3s, there may be three 1PPS pulses. An expected count value of a 1PPS time counter determined based on the local crystal oscillator frequency of the terminal 100 is 10,000 times. However, in actual counting, a count value of the local 1PPS time counter of the terminal 100 in a first 1PPS pulse is 9,998 times, a count value of the local 1PPS time counter of the terminal 100 in a second 1PPS pulse is 9,999 times, and a count value of the local 1PPS time counter of the terminal 100 in a third 1PPS pulse is 9,998 times. Therefore, a sum *offset* of differences between the 1PPS pulse time count values and the expected value of the local crystal oscillator in the time t is 5.

The local crystal oscillator frequency deviation $fd_2$ of the terminal 100 may be determined according to the following Formula (10):

$$fd_2 = \frac{f_s * offset}{t * f_u + offset} \qquad \text{Formula (10)}$$

In Formula (10), $fd_2$ is the local crystal oscillator frequency deviation of the terminal 100, $f_s$ is the downlink frequency at which the BeiDou short message satellite 21 forwards the RDSS outbound signal, *offset* is the sum of the differences between the 1PPS pulse time count values and the expected value in the time t, t is entire counting duration of the local 1PPS time counter, and $f_u$ is the local crystal oscillator frequency of the terminal 100.

S810: The terminal 100 determines a receiving frequency $f_r$ of the RDSS outbound signal based on the doppler shift $fd_1$ from the BeiDou short message satellite 21 to the terminal 100, the local crystal oscillator frequency deviation $fd_2$ of the terminal 100, and the downlink frequency $f_s$ of the BeiDou short message satellite 21.

The receiving frequency $f_r$ of the RDSS outbound signal may be determined according to the following Formula (11):

$$f_r = f_s + fd_1 + fd_2 \qquad\qquad \text{Formula (11)}$$

In Formula (11), $f_r$ is the receiving frequency of the RDSS outbound signal, $f_s$ is the downlink frequency at which the BeiDou short message satellite 21 forwards the RDSS outbound signal, $fd_1$ is the doppler shift from the BeiDou short message satellite 21 to the terminal 100, and $fd_2$ is the local crystal oscillator frequency deviation of the terminal 100.

S811: The terminal 100 may acquire the RDSS outbound signal based on the phase shift of the chip in the propagation process of the RDSS outbound signal and the receiving frequency $f_r$ of the RDSS outbound signal.

In a possible implementation, after determining the phase shift of the chip in the propagation process of the RDSS outbound signal, the terminal 100 adds a specific chip phase shift error $\Delta chip$ to the phase shift of the chip to obtain a phase shift range ( initChip - $\Delta chip$, initChip + $\Delta chip$) of the chip of the RDSS outbound signal. The terminal 100 may acquire the RDSS outbound signal in time domain based on the phase shift range of the chip of the RDSS outbound signal.

In a possible implementation, after determining the receiving frequency $f_r$ of the RDSS outbound signal, the terminal 100 may add a specific frequency error $\Delta f$ to the receiving frequency $f_r$ of the RDSS outbound signal, to obtain a receiving frequency search range ($f_r$ - $\Delta f$, $f_r$ + $\Delta f$) of the RDSS outbound signal. The terminal 100 may acquire the RDSS outbound signal in frequency domain based on the receiving frequency search range of the RDSS outbound signal.

In this embodiment of this application, steps S805 to S807 may be performed before or after steps S808 to S8010, or may be performed in parallel. This is not limited in this application.

Embodiments of this application provide a satellite signal acquisition method. The terminal 100 may obtain the ephemeris parameter, the 1PPS pulse, the ionospheric parameter, and the like of the BeiDou short message satellite 21, and calculate the time $t_u$ for propagating the RDSS outbound signal from the BeiDou network device 200 to the BeiDou short message satellite 21, the time $t_d$ for propagating the RDSS outbound signal from the BeiDou short message satellite 21 to the terminal 100, and the doppler shift $fd_1$ of the RDSS outbound signal from the BeiDou short message satellite 21 to the terminal 100. Further, the terminal 100 may determine the phase shift of the chip in the propagation process of the RDSS outbound signal and the receiving frequency $f_r$ of the RDSS outbound signal. In this way, the terminal 100 can quickly acquire the RDSS outbound signal.

The foregoing content describes in detail the method provided in this application. To better implement the foregoing solutions in embodiments of this application, embodiments of this application further provide a corresponding apparatus or device.

In embodiments of this application, functional module division may be performed on the terminal 100 based on the foregoing method examples. For example, division of the functional modules may be based on respective functions, or two or more functions may be integrated in one processing module. The integrated module may be implemented in a form of hardware, or may be implemented in a form of a software functional module. It should be noted that, in embodiments of this application, module division is an example, and is merely logical functional division. In actual implementation, another division manner may be used.

The following describes in detail communication apparatuses in embodiments of this application with reference to FIG. 9 to FIG. 12.

Refer to FIG. 9. In a case in which an integrated unit is used, FIG. 9 is a diagram of a structure of a communication apparatus 900 according to an embodiment of this application. The communication apparatus 900 may be the terminal 100 in the foregoing embodiments. Optionally, the communication apparatus 900 may be a chip/chip system, for example, a BeiDou communication chip. As shown in FIG. 9, the communication apparatus 900 may include a transceiver unit 910 and a processing unit 920.

In a design, the transceiver unit 910 may be configured to perform functional steps related to sending, receiving, and acquisition of satellite signals that are performed by the terminal 100 in the method embodiment shown in FIG. 8A, FIG. 8B, and FIG. 8C.

The processing unit 920 may be configured to perform functional steps such as delay calculation and frequency calculation performed by the terminal 100 in the method embodiment shown in FIG. 8A, FIG. 8B, and FIG. 8C.

It should be understood that the communication apparatus 900 in this design may correspondingly perform the method steps performed by the terminal 100 in the foregoing embodiments. For brevity, details are not described herein again.

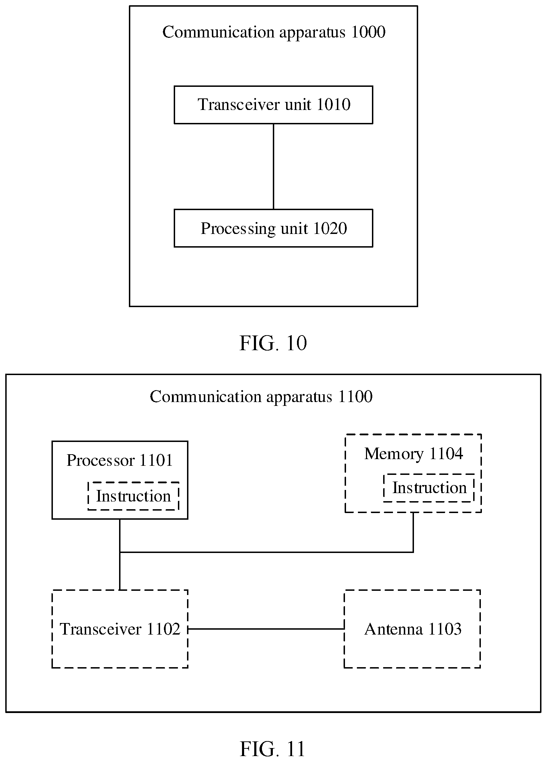

Refer to FIG. 10. In a case in which an integrated unit is used, FIG. 10 is a diagram of a structure of a communication apparatus 1000 according to an embodiment of this application. The communication apparatus 1000 may be the BeiDou network device 200 in the foregoing embodiments. Optionally, the communication apparatus 1000 may be a specific network element in the BeiDou network device 200, for example, one network element or a combination of a plurality of network elements in the BeiDou ground transceiver station 22, the BeiDou central station 23, and the BeiDou short message integrated communication platform 24. As shown in FIG. 10, the communication apparatus 1000 may include a transceiver unit 1010 and a processing unit 1020.

In a design, the transceiver unit 1010 may be configured to perform functional steps related to sending and receiving performed by the BeiDou network device 200 in the foregoing embodiments.

The processing unit 1020 may be configured to perform functional steps related to RDSS outbound signal generation performed by the BeiDou network device 200 in the foregoing embodiments.

It should be understood that the communication apparatus 1000 in this design may correspondingly perform the method steps performed by the BeiDou network device 200 in the foregoing embodiments. For brevity, details are not described herein again.

The terminal 100 and the BeiDou network device 200 in embodiments of this application are described above. It should be understood that a product in any form that has a function of the terminal 100 in FIG. 9 and a product in any form that has a function of the BeiDou network device 200 in FIG. 10 fall within the protection scope of embodiments of this application.

In a possible product form, the terminal 100 in embodiments of this application may be implemented by a general bus architecture.

Refer to FIG. 11. FIG. 11 is a diagram of a structure of a communication apparatus 1100 according to an embodiment of this application. The communication apparatus 1100 may be the terminal 100 or an apparatus in the terminal 100. As shown in FIG. 11, the communication apparatus 1100 includes a processor 1101 and a transceiver 1102 that is internally connected to and communicates with the processor. The processor 1101 is a general-purpose processor, a dedicated processor, or the like. For example, the processor may be a baseband processor or a central processing unit for satellite communication. The baseband processor for satellite communication may be configured to process a satellite communication protocol and satellite communication data. The central processing unit may be configured to: control the communication apparatus (for example, a baseband chip, a terminal, or a terminal chip), execute a computer program, and process data of the computer program. The transceiver 1102 may be referred to as a transceiver unit, a transceiver apparatus, a transceiver circuit, or the like, and is configured to implement a sending function and a receiving function. The transceiver 1102 may include a receiver and a transmitter. The receiver may be referred to as a receiver apparatus, a receiver circuit, or the like, and is configured to implement a receiving function. The transmitter may be referred to as a transmitter apparatus, a transmitter circuit, or the like, and is configured to implement a sending function. Optionally, the communication apparatus 1100 may further include an antenna 1103 and/or a radio frequency unit (not shown in the figure). The antenna 1103 and/or the radio frequency unit may be located inside the communication apparatus 1100, or may be separated from the communication apparatus 1100, that is, the antenna 1103 and/or the radio frequency unit may be deployed remotely or deployed in a distributed manner.

Optionally, the communication apparatus 1100 may include one or more memories 1104. The memory 1104 may store instructions. The instructions may be a computer program, and the computer program may be run on the communication apparatus 1100, so that the communication apparatus 1100 performs the method described in the foregoing method embodiments. Optionally, the memory 1104 may further store data. The communication apparatus 1100 and the memory 1104 may be disposed separately, or may be integrated.

The processor 1101, the transceiver 1102, and the memory 1104 may be connected by using a communication bus.

In a design, the communication apparatus 1100 may be configured to perform functions of the terminal 100 in the foregoing embodiments. The processor 1101 may be configured to perform functional steps such as delay calculation and frequency calculation performed by the terminal 100 in the method embodiment shown in FIG. 8A, FIG. 8B, and FIG. 8C, and/or another process of the technologies described in this specification. The transceiver 1102 may be configured to perform functional steps related to sending, receiving, and acquisition of satellite signals performed by the terminal 100 in the method embodiment shown in FIG. 8A, FIG. 8B, and FIG. 8C, and/or another process of the technologies described in this specification.

In any one of the foregoing designs, the processor 1101 may include a transceiver configured to implement a receiving function and a sending function. For example, the transceiver may be a transceiver circuit, an interface, or an interface circuit. Transceiver circuits, interfaces, or interface circuits that are configured to implement receiving and sending functions may be separated, or may be integrated. The transceiver circuit, the interface, or the interface circuit may be configured to read or write code/data, or the transceiver circuit, the interface, or the interface circuit may be configured to transmit or transfer a signal.

In any one of the foregoing designs, the processor 1101 may store instructions. The instructions may be a computer program. The computer program is run on the processor 1101, so that the communication apparatus 1100 can perform the method steps performed by the terminal 100 in the foregoing method embodiments. The computer program may be fixed in the processor 1101. In this case, the processor 1101 may be implemented by hardware.

In an implementation, the communication apparatus 1100 may include a circuit, and the circuit may implement a sending, receiving, or communication function in the foregoing method embodiments. The processor and the transceiver described in this application may be implemented in an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, and the like. The processor and transceiver may also be fabricated by using various IC processing technologies, such as complementary metal oxide semiconductor (complementary metal oxide semiconductor, CMOS), nMetal-oxide-semiconductor (nMetal-oxide-semiconductor, NMOS), positive channel metal oxide semiconductor (positive channel metal oxide semiconductor, PMOS), bipolar junction transistor, (bipolar junction transistor, BJT), bipolar CMOS (BiCMOS), and silicon germanium (SiGe), gallium arsenide (GaAs).

A scope of the communication apparatus described in this application is not limited thereto, and a structure of the communication apparatus may not be limited in FIG. 11. The communication apparatus 1100 may be an independent device or may be a part of a larger device. For example, the communication apparatus 1100 may be:

(1) an independent integrated circuit IC, a chip, or a chip system or subsystem;
(2) a set that has one or more ICs, where optionally, the IC set may also include a storage component configured to store data and a computer program;
(3) an ASIC like a modem (Modem);
(4) a module that can be embedded in another device;
(5) a receiver, a terminal, a smart terminal, a cellular phone, a wireless device, a handset, a mobile unit, a vehicle-mounted device, a network device, a cloud device, an artificial intelligence device, and the like; and
(6) other devices.

In a possible product form, any network element (for example, the BeiDou ground transceiver station 22, the BeiDou central station 23, or the BeiDou short message integrated communication platform 24) in the BeiDou network device 200 in embodiments of this application may be implemented by using a general bus architecture.

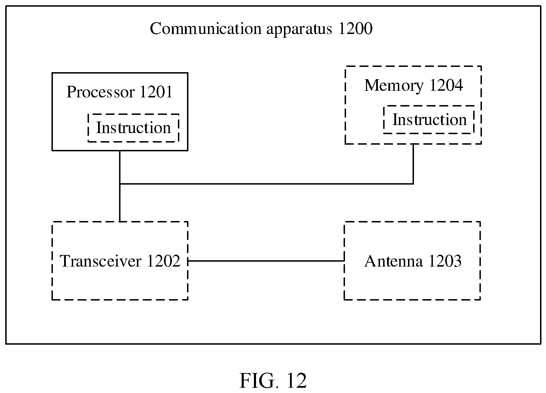

Refer to FIG. 12. FIG. 12 is a diagram of a structure of a communication apparatus 1200 according to an embodiment of this application. The communication apparatus 1200 may be the BeiDou network device 200 or an apparatus in the BeiDou network device 200. As shown in FIG. 12, the communication apparatus 1200 includes a processor 1201 and a transceiver 1202 that is internally connected to and communicates with the processor. The processor 1201 is a general-purpose processor, a dedicated processor, or the like. For example, the processor may be a baseband processor or a central processing unit for satellite communication. The baseband processor for satellite communication may be configured to process a satellite communication protocol and satellite communication data. The central processing unit may be configured to: control the communication apparatus (for example, a baseband chip), execute a computer program, and process data of the computer program. The transceiver 1202 may be referred to as a transceiver unit, a transceiver apparatus, a transceiver circuit, or the like, and is configured to implement a sending function and a receiving function. The transceiver 1202 may include a receiver and a transmitter. The receiver may be referred to as a receiver apparatus, a receiver circuit, or the like, and is configured to implement a receiving function. The transmitter may be referred to as a transmitter apparatus, a transmitter circuit, or the like, and is configured to implement a sending function. Optionally, the communication apparatus 1200 may further include an antenna 1203 and/or a radio frequency unit (not shown in the figure). The antenna 1203 and/or the radio frequency unit may be located inside the communication apparatus 1200, or may be separated from the communication apparatus 1200, that is, the antenna 1203 and/or the radio frequency unit may be deployed remotely or deployed in a distributed manner.

Optionally, the communication apparatus 1200 may include one or more memories 1204. The memory 1204 may store instructions. The instructions may be a computer program, and the computer program may be run on the communication apparatus 1200, so that the communication apparatus 1200 performs the method described in the foregoing method embodiments. Optionally, the memory 1204 may further store data. The communication apparatus 1200 and the memory 1204 may be disposed separately, or may be integrated.

The processor 1201, the transceiver 1202, and the memory 1204 may be connected by using a communication bus.

In a design, the communication apparatus 1200 may be configured to perform functions of the BeiDou network device 200 in the foregoing embodiments. The processor 1201 may be configured to perform functional steps related to RDSS outbound signal generation performed by the BeiDou network device 200 in the foregoing embodiments and/or another process of the technologies described in this specification. The transceiver 1202 may be configured to perform functional steps related to sending and receiving performed by the BeiDou network device 200 in the foregoing embodiments and/or another process of the technologies described in this specification.

In any one of the foregoing designs, the processor 1201 may include a transceiver configured to implement a receiving function and a sending function. For example, the transceiver may be a transceiver circuit, an interface, or an interface circuit. Transceiver circuits, interfaces, or interface circuits that are configured to implement receiving and sending functions may be separated, or may be integrated. The transceiver circuit, the interface, or the interface circuit may be configured to read or write code/data, or the transceiver circuit, the interface, or the interface circuit may be configured to transmit or transfer a signal.

In any one of the foregoing designs, the processor 1201 may store instructions. The instructions may be a computer program. The computer program is run on the processor 1201, so that the communication apparatus 1200 can perform the method steps performed by the terminal 100 in the foregoing method embodiments. The computer program may be fixed in the processor 1201. In this case, the processor 1201 may be implemented by hardware.

An embodiment of this application further provides a computer-readable storage medium. The computer-readable storage medium stores computer program code. When the processor executes the computer program code, the processor performs the method in any of the foregoing embodiments.

An embodiment of this application further provides a computer program product. When the computer program product is run on a computer, the computer is enabled to perform the method in any of the foregoing embodiments.

An embodiment of this application further provides a communication apparatus. The apparatus may exist in a product form of a chip. A structure of the apparatus includes a processor and an interface circuit. The processor is configured to communicate with another apparatus through a receiving circuit, so that the apparatus performs the method in any of the foregoing embodiments.

An embodiment of this application further provides a BeiDou communication system, including a terminal 100 and a BeiDou network device 200. The terminal 100 and the BeiDou network device 200 may perform the method in any of the foregoing embodiments.

This application describes a method for satellite signal acquisition in a BeiDou communication system. It may be understood that there may also be a requirement for supporting satellite signal acquisition in another satellite system. Therefore, the method is not limited to the BeiDou communication system. If another satellite system also supports satellite signal acquisition, the method described in this application is also applicable to communication of the another satellite system.

Methods or algorithm steps described with reference to the content disclosed in this application may be implemented by hardware, or may be implemented by a processor executing software instructions. The software instructions may include corresponding software modules. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk drive, a removable hard disk, a compact disc read-only memory (CD-ROM), or any other form of storage medium well-known in the art. For example, a storage medium is coupled to a processor, so that the processor can read information from the storage medium and write information into the storage medium. The storage medium may be a component of the processor. The processor and the storage medium may be in an ASIC. The ASIC may be in a core network interface device. The processor and the storage medium may alternatively exist in the core network interface device as independent components.

A person skilled in the art should be aware that in the foregoing one or more examples, functions described in this application may be implemented by hardware, software, firmware, or any combination thereof. When the functions are implemented by software, the functions may be stored in a computer-readable medium or transmitted as one or more instructions or code in a computer-readable medium. The computer-readable medium includes a computer-readable storage medium and a communication medium, where the communication medium includes any medium that facilitates transmission of a computer program from one place to another. The storage medium may be any available medium accessible to a general-purpose or a dedicated computer.

The foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the scope of the technical solutions of embodiments of this application.

**Claims**

1. A satellite signal acquisition method, comprising:

receiving, by a terminal, a navigation message broadcast by a satellite by using a radio navigation satellite service RNSS signal, and determining a position of the terminal, a speed of the terminal, and an ephemeris parameter, an ionospheric parameter, and a clock synchronization pulse of the satellite;
determining, by the terminal based on the position of the terminal, the speed of the terminal, the ephemeris parameter, the ionospheric parameter, and a position of a satellite ground device, a first propagation time for propagating a radio determination satellite service RDSS outbound signal from the satellite ground device to the satellite and a second propagation time for propagating the RDSS outbound signal from the satellite to the terminal;

determining, by the terminal, a propagation delay of the RDSS outbound signal based on the first propagation time and the second propagation time;

determining, by the terminal based on the propagation delay of the RDSS outbound signal and the clock synchronization pulse, a phase shift of the RDSS outbound signal in the propagation process; and

acquiring, by the terminal, the RDSS outbound signal based on the phase shift of the RDSS outbound signal in the propagation process.

2. The method according to claim 1, wherein the method further comprises:

determining, by the terminal based on the position of the terminal, the speed of the terminal, the ephemeris parameter, and a downlink frequency at which the satellite forwards the RDSS outbound signal, a first doppler shift of the RDSS outbound signal from the satellite to the terminal;

determining, by the terminal, a receiving frequency of the RDSS outbound signal based on the downlink frequency at which the satellite forwards the RDSS outbound signal and the first doppler shift; and

the acquiring, by the terminal, the RDSS outbound signal based on the phase shift of the RDSS outbound signal in the propagation process specifically comprises:

acquiring, by the terminal, the RDSS outbound signal based on the phase shift of the RDSS outbound signal in the propagation process and the receiving frequency of the RDSS outbound signal.

3. The method according to claim 2, wherein the method further comprises:

determining, by the terminal, a local crystal oscillator frequency deviation of the terminal based on the clock synchronization pulse, a local crystal oscillator frequency of the terminal, and the downlink frequency at which the satellite forwards the RDSS outbound signal; and

the determining, by the terminal, a receiving frequency of the RDSS outbound signal based on the downlink frequency at which the satellite forwards the RDSS outbound signal and the first doppler shift specifically comprises:

determining, by the terminal, the receiving frequency of the RDSS outbound signal based on the downlink frequency at which the satellite forwards the RDSS outbound signal, the first doppler shift, and the local crystal oscillator frequency deviation of the terminal.

4. The method according to claim 2 or 3, wherein the determining, by the terminal based on the position of the terminal, the speed of the terminal, the ephemeris parameter, and a downlink frequency at which the satellite forwards the RDSS outbound signal, a first doppler shift of the RDSS outbound signal from the satellite to the terminal specifically comprises:

determining, by the terminal, a satellite position and a satellite speed of the satellite based on the ephemeris parameter; and

determining, by the terminal, the first doppler shift based on the satellite position, the satellite speed, the position of the terminal, the speed of the terminal, and the downlink frequency at which the satellite forwards the RDSS outbound signal.

5. The method according to any one of claims 2 to 4, wherein the acquiring, by the terminal, the RDSS outbound signal based on the phase shift of the RDSS outbound signal in the propagation process and the receiving frequency of the RDSS outbound signal specifically comprises:

determining, by the terminal, a receiving frequency search range of the RDSS outbound signal based on the receiving frequency of the RDSS outbound signal and a frequency error; and

acquiring, by the terminal, the RDSS outbound signal based on the phase shift of the RDSS outbound signal in the propagation process and the receiving frequency search range of the RDSS outbound signal.

6. The method according to any one of claims 1 to 5, wherein the acquiring, by the terminal, the RDSS outbound signal based on the phase shift of the RDSS outbound signal in the propagation process specifically comprises:

determining, by the terminal, a phase shift range of the RDSS outbound signal based on the phase shift and a phase shift error of the RDSS outbound signal in the propagation process; and

acquiring, by the terminal, the RDSS outbound signal in time domain based on the phase shift range of the RDSS outbound signal.

7. The method according to any one of claims 1 to 6, wherein the determining, by the terminal based on the position of the terminal, the speed of the terminal, the ephemeris parameter, the ionospheric parameter, and a position of a satellite ground device, a first propagation time for propagating a radio determination satellite service RDSS outbound signal from the satellite ground device to the satellite and a second propagation time for propagating the RDSS outbound signal from the satellite to the terminal specifically comprises:

determining, by the terminal, the satellite position and the satellite speed of the satellite based on the ephemeris parameter and the ionospheric parameter;
determining, by the terminal, an ionospheric delay of the RNSS signal based on the ionospheric parameter, and determining an uplink ionospheric propagation delay of the RDSS outbound signal and a downlink ionospheric propagation delay of the RDSS outbound signal based on the ionospheric delay of the RNSS signal;
determining, by the terminal by using a first tropospheric delay model, an uplink tropospheric propagation delay of the RDSS outbound signal based on the satellite position of the satellite and the position of the satellite ground device;
determining, by the terminal by using a second tropospheric delay model, a downlink tropospheric propagation delay of the RDSS outbound signal based on the satellite position of the satellite and the position of the terminal;
determining, by the terminal, the first propagation time based on the uplink tropospheric propagation delay of the RDSS outbound signal in the process of propagating the RDSS outbound signal from the satellite ground device to the satellite, the uplink ionospheric propagation delay of the RDSS outbound signal in the process of propagating the RDSS outbound signal from the satellite ground device to the satellite, a transmission delay of the satellite ground device, the position of the satellite ground device, and the position of the satellite; and
determining, by the terminal, the second propagation time based on the downlink tropospheric propagation delay of the RDSS outbound signal in the process of propagating the RDSS outbound signal from the satellite to the terminal, the downlink ionospheric propagation delay of the RDSS outbound signal in the process of propagating the RDSS outbound signal from the satellite to the terminal, the position of the satellite, and the position of the terminal.

8. The method according to any one of claims 1 to 7, wherein the phase shift of the RDSS outbound signal in the propagation process comprises a chip offset for the phase shift of the RDSS outbound signal in the propagation process; and
the determining, by the terminal based on the propagation delay of the RDSS outbound signal and the clock synchronization pulse, a phase shift of the RDSS outbound signal in the propagation process specifically comprises:
determining, by the terminal, the chip offset for the phase shift of the RDSS outbound signal in the propagation process based on the propagation delay of the RDSS outbound signal, the clock synchronization pulse, a quantity L of chips of a spreading code sequence of the RDSS outbound signal, a sequence period of the spreading code sequence, and a secondary code period in the RDSS outbound signal.

9. The method according to claim 7, wherein the first propagation time is determined according to the following formula:

$$t_u = \frac{\sqrt{(x_c - x_s)^2 + (y_c - y_s)^2 + (z_c - z_s)^2}}{c} + t_c + t_{trop-u} + t_{i-u},$$

wherein
$t_u$ is the first propagation time, $x_c$, $y_c$, and $z_c$ are position coordinates of the satellite ground device at a moment T in a three-dimensional coordinate system, $x_s$, $y_s$, and $z_s$ are position coordinates of the satellite at the moment T in the three-dimensional coordinate system, $t_c$ is the transmission delay of the satellite ground device, $t_{trop-u}$ is the uplink tropospheric propagation delay of the RDSS outbound signal, $t_{i-u}$ is the uplink ionospheric propagation delay of the RDSS outbound signal, c is a propagation speed of an electromagnetic wave, and the moment T may be a moment at which the terminal triggers the process of acquiring the RDSS outbound signal.

10. The method according to claim 7, wherein the second propagation time is determined according to the following formula:

$$t_d = \frac{\sqrt{(x_{\mathrm{u}}-x_{\mathrm{s}})^2+(y_{\mathrm{u}}-y_{\mathrm{s}})^2+(z_{\mathrm{u}}-z_{\mathrm{s}})^2}}{c} + t_{trop-d} + t_{\mathrm{i-d}},$$

wherein
$t_d$ is the second propagation time, $x_{\mathrm{u}}$, $y_{\mathrm{u}}$, and $z_{\mathrm{u}}$ are position coordinates of the terminal at a moment T in a three-dimensional coordinate system, $x_{\mathrm{s}}$, $y_{\mathrm{s}}$, and $z_{\mathrm{s}}$ are position coordinates of the satellite at the moment T in the three-dimensional coordinate system, $t_{\mathrm{trop-d}}$ is the downlink tropospheric propagation delay of the RDSS outbound signal, $t_{\mathrm{i-d}}$ is the downlink ionospheric propagation delay of the RDSS outbound signal, and c is a propagation speed of an electromagnetic wave.

11. The method according to claim 9 or 10, wherein the propagation delay of the RDSS outbound signal is determined according to the following formula:

$\Delta t = t_u + t_d$, wherein
$\Delta t$ is the propagation delay of the RDSS outbound signal, $t_u$ is the first propagation time, and $t_d$ is the second propagation time.

12. The method according to claim 8, wherein the clock synchronization pulse is a pulse per second 1PPS; and a phase shift of a chip in the propagation process of the RDSS outbound signal is determined according to the following formula:

$$\mathrm{initChip} = \left(\frac{1000}{T_r} * L * \frac{T_r}{T_m} - \Delta t * L\right) \% \left(L * \frac{T_r}{T_m}\right) \% L,$$

wherein
initChip is the chip offset for the phase shift of the RDSS outbound signal in the propagation process, $T_r$ is the secondary code period in the RDSS outbound signal, L is the quantity of chips of the spreading code sequence of the RDSS outbound signal, and $T_m$ is the sequence period of the spreading code sequence of the RDSS outbound signal.

13. The method according to claim 3, wherein the receiving frequency of the RDSS outbound signal is determined according to the following formula:

$$f_r = f_s + fd_1 + fd_2,$$

wherein
wherein $f_r$ is the receiving frequency of the RDSS outbound signal, $f_s$ is the downlink frequency at which the satellite forwards the RDSS outbound signal, $fd_1$ is the first doppler shift, and $fd_2$ is the local crystal oscillator frequency deviation of the terminal.

14. The method according to claims 1 to 13, wherein the satellite is a geosynchronous earth orbit GEO satellite.

15. The method according to any one of claims 2 to 4, wherein the terminal pre-stores the position of the satellite ground device.

16. A terminal, comprising one or more processors and one or more memories, wherein the one or more memories are coupled to the one or more processors, the one or more memories are configured to store computer program code, the computer program code comprises computer instructions, and when the one or more processors execute the computer instructions, the terminal is enabled to perform the method according to any one of claims 1 to 15.

17. A computer storage medium comprising computer instructions, wherein when the computer instructions are run on a terminal, the terminal is enabled to perform the method according to any one of claims 1 to 15.

BeiDou communication system 10

FIG. 1

FIG. 2A

FIG. 2B

Terminal 100

Antenna 1      Antenna 2

| Mobile communication module 2G/3G/4G/5G [150] | Wireless communication module BT/WLAN/GNSS/NFC/IR/FM/BeiDou communication [160] |

| Speaker [170A] | | |
| Receiver [170B] | Audio module [170] | Processor [110] |
| Microphone [170C] | | |
| Headset jack [170D] | | |

Displays 1 to N [194]

Cameras 1 to N [193]

Indicator [192]

Motor [191]

Button [190]

Internal memory [121]

SIM card interfaces 1 to N [195]

External memory interface [120]

USB port [130]

Charging input

Charging management module [140]

Power management module [141]

Battery [142]

Sensor module [180]

Pressure sensor [180A]

Gyro sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 3

Message data convergence protocol (MDCP) layer | Application (APP) layer

MDCP PDU 0
- Successor indication
- M_segment

MDCP PDU 1
- Successor indication
- M_segment

MDCP PDU 2
- Successor indication
- M_segment

TO FIG. 4B

MDCP SDU

...

Encryption indication

Compression indication

Packet header

Encrypted data

← Encryption

Compression indication

Compressed data

← Compression

Original data

Packet segmentation

**BeiDou network device 200**

FIG. 4A

EP 4 481 441 A1

Satellite link control (SLC) layer

S2C-d branch:

| Physical frame (114 ms) | Version number |
| | User frame (general data frame- terminal 500) |
| | ... |
| | User frame (general data frame- terminal 100) |
| | Check bit |
| Physical frame (114 ms) | Version number |
| | User frame (general data frame- terminal 100) |
| | ... |
| | User frame (ACK frame- terminal 400) |
| | Check bit |

Coding

Coding

Scheduling

User frame (general data frame) — SLC PDU — Frame header / S_segment

User frame (general data frame) — SLC PDU — Frame header / S_segment

User frame (general data frame) — SLC PDU — Frame header / S_segment

User frame (general data frame) — SLC PDU — Frame header / S_segment

SLC SDU 0

SLC SDU 1

SLC SDU 2

Frame segmentation

TO FIG. 4C

CONT. FROM FIG. 4A

FIG. 4B

Physical (PHY) layer

| S2C-p branch: | S2C-d branch: | S2C-d branch: | S2C-d branch: |
|---|---|---|---|

FIG. 4C

EP 4 481 441 A1

CONT.
FROM
FIG. 4B

FIG. 5A

Satellite link control (SLC) layer

S2C-d branch:

| Physical frame (114 ms) | Version number |
| | User frame (general data frame-terminal 500) |
| | ... |
| | User frame (general data frame-terminal 100) |

| Physical frame (114 ms) | Check bit |
| | Version number |
| | User frame (general data frame-terminal 100) |
| | ... |
| | User frame (ACK frame-terminal 400) |
| | Check bit |

Frame obtaining

User frame (general data frame)

User frame (general data frame)

User frame (general data frame)

User frame (general data frame)

SLC PDU | Frame header / S_segment

SLC PDU | Frame header / S_segment

SLC PDU | Frame header / S_segment

SLC PDU | Frame header / S_segment

SLC SDU 0

SLC SDU 1

SLC SDU 2

Framing

TO FIG. 5C

CONT. FROM FIG. 5A

FIG. 5B

EP 4 481 441 A1

Physical (PHY) layer

Receiving

S2C-p branch:

| Secondary code (125 ms) | Physical slot (125 ms) | Spread modulated data (spread modulated data) |

S2C-d branch:

| Physical slot (125 ms) | Spread modulated data (spread modulated data) |

S2C-d branch:

| Modulated data (modulated data) |
| Modulated data (modulated data) |

S2C-d branch:

| 11 ms | Reserved segment |
| | Code data (code data) | Decoding |
| 11 ms | Reserved segment |
| | Code data (code data) | Decoding |

Despreading

Demodulation

CONT. FROM FIG. 5B

FIG. 5C

EP 4 481 441 A1

Movement speed (Vzs)

Movement speed
(Vxs)

Movement speed
(Vys)

BeiDou short message satellite 21

Ephemeris track

Propagation time td

Propagation time tu

EP 4 481 441 A1

Ionosphere

Troposphere

Movement
speed (Vzu)

Movement
speed (Vyu)

Movement
speed (Vxu)  Terminal
100

BeiDou network
device 200

FIG. 6

Moment T1 at which a
BeiDou network device
200 sends an RDSS
outbound signal

Moment T2 at which a
terminal 100 receives the
RDSS outbound signal

Propagation delay Δt of the
RDSS outbound signal

Correct chip
phase shift
search range

Incorrect chip
phase shift
search range

1PPS

1PPS

FIG. 7

S801: A terminal 100 receives a navigation message broadcast by a BeiDou short message satellite 21 by using an RNSS signal

S802: The terminal 100 determines a position and a speed of the terminal 100 based on the navigation message broadcast by using the RNSS signal

S803: The terminal 100 obtains an ephemeris parameter, an ionospheric parameter, and a 1PPS pulse of the BeiDou short message satellite

S804: Based on the ephemeris parameter and the ionospheric parameter of the BeiDou short message satellite 21, the terminal 100 determines a satellite position and a satellite speed of the BeiDou short message satellite, an uplink tropospheric propagation delay of an RDSS outbound signal, a downlink tropospheric propagation delay of the RDSS outbound signal, an uplink ionospheric propagation delay of the RDSS outbound signal, and a downlink ionospheric propagation delay of the RDSS outbound signal

S805: Based on the uplink tropospheric propagation delay of the RDSS outbound signal, the downlink tropospheric propagation delay of the RDSS outbound signal, the uplink ionospheric propagation delay of the RDSS outbound signal, the downlink ionospheric propagation delay of the RDSS outbound signal, the position of the terminal 100, the position of the BeiDou short message satellite 21, a position of a BeiDou network device 200, and a transmission delay of the BeiDou network device 200, the terminal 100 determines a time for propagating the RDSS outbound signal from the BeiDou network device 200 to the BeiDou short message satellite 21 and a time for propagating the RDSS outbound signal from the BeiDou short message satellite 21 to the terminal 100

TO
FIG. 8B

TO
FIG. 8B

FIG. 8A

CONT.
FROM
FIG. 8A

CONT.
FROM
FIG. 8A

S806: The terminal 100 determines a propagation delay of the RDSS outbound signal based on the time for propagating the RDSS outbound signal from the BeiDou network device 200 to the BeiDou short message satellite 21 and the time for propagating the RDSS outbound signal from the BeiDou short message satellite 21 to the terminal 100

S807: The terminal 100 determines a phase shift of a chip in the propagation process of the RDSS outbound signal based on the propagation delay of the RDSS outbound signal, the 1PPS pulse, a quantity L of chips of a spreading code sequence in the RDSS outbound signal, a sequence period of the spreading code sequence, and a secondary code period in the RDSS outbound signal

S808: The terminal 100 determines a doppler shift from the BeiDou short message satellite 21 to the terminal 100 based on the position and the movement speed of the BeiDou short message satellite 21, the position and the movement speed of the terminal 100, and a downlink frequency at which the BeiDou short message satellite 21 forwards the RDSS outbound signal

S809: The terminal 100 determines a local crystal oscillator frequency deviation of the terminal 100 based on the 1PPS pulse, a local crystal oscillator frequency of the terminal 100, and the downlink frequency at which the BeiDou short message satellite 21 forwards the RDSS outbound signal

TO
FIG. 8C

TO
FIG. 8C

FIG. 8B

CONT.
FROM
FIG. 8B

CONT.
FROM
FIG. 8B

S810: The terminal 100 determines a receiving frequency of the RDSS outbound signal based on the doppler shift from the BeiDou short message satellite 21 to the terminal 100, the local crystal oscillator frequency deviation of the terminal 100, and the downlink frequency of the BeiDou short message satellite 21

S811: The terminal 100 may acquire the RDSS outbound signal based on the phase shift of the chip in the propagation process of the RDSS outbound signal and the receiving frequency of the RDSS outbound signal

FIG. 8C

Communication apparatus 900

Transceiver unit 910

Processing unit 920

FIG. 9

Communication apparatus 1000

Transceiver unit 1010

Processing unit 1020

FIG. 10

Communication apparatus 1100

Processor 1101

Instruction

Memory 1104

Instruction

Transceiver 1102

Antenna 1103

FIG. 11

Communication apparatus 1200

Processor 1201

Instruction

Memory 1204

Instruction

Transceiver 1202

Antenna 1203

FIG. 12

## INTERNATIONAL SEARCH REPORT

International application No.

**PCT/CN2023/084546**

| A. | CLASSIFICATION OF SUBJECT MATTER |
| --- | --- |
| | G01S19/30(2010.01)i;  G01S19/24(2010.01)n;  G04R20/02(2013.01)n |

According to International Patent Classification (IPC) or to both national classification and IPC

| B. | FIELDS SEARCHED |
| --- | --- |

Minimum documentation searched (classification system followed by classification symbols)

IPC:  G01S19 G04R20

Documentation searched other than minimum documentation to the extent that such documents are included in the fields searched

Electronic data base consulted during the international search (name of data base and, where practicable, search terms used)

CNABS, CNTXT, CNKI: 捕获, 出站, 传播, 传输, 导航, 电离层, 电文, 多普勒, 跟踪, 获取, 获得, 脉冲, 频偏, 频移, 频点, 上行, 下行, 时间, 时延, 同步, 卫星, 无线电测定, 无线电导航, 相位, 信号, 星历, 延时, 终端, 对流层; DWPI, OETXT, VEN: phase, PPS, RDSS, RNSS, time, shift, synchronous, capture, radio determination satellite service, radio navigation satellite system, frequency, doppler, delay

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 113703011 A (TECHTOTOP MICROELECTRONICS TECHNOLOGY CO., LTD.) 26 November 2021 (2021-11-26)<br>    description, paragraphs 29 and 32-59 | 1-17 |
| A | CN 113447964 A (SHENZHEN FAREAST HUAQIANG NAVIGATION POSITIONING CO., LTD.) 28 September 2021 (2021-09-28)<br>    entire document | 1-17 |
| A | CN 103676634 A (NO.54 RESEARCH INSTITUTE OF CETC) 26 March 2014 (2014-03-26)<br>    entire document | 1-17 |
| A | CN 105959091 A (ACADEMY OF OPTO-ELECTRONICS, CHINESE ACADEMY OF SCIENCES) 21 September 2016 (2016-09-21)<br>    entire document | 1-17 |
| A | CN 111060940 A (MORNINGCORE TECHNOLOGY CO., LTD.) 24 April 2020 (2020-04-24)<br>    entire document | 1-17 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 June 2023** | **05 July 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

| | INTERNATIONAL SEARCH REPORT | International application No. |
|---|---|---|
| | | **PCT/CN2023/084546** |

**C.    DOCUMENTS CONSIDERED TO BE RELEVANT**

| Category* | Citation of document, with indication, where appropriate, of the relevant passages | Relevant to claim No. |
|---|---|---|
| A | CN 112968746 A (BEIJING GUODIAN GAOKE TECHNOLOGY CO., LTD.) 15 June 2021 (2021-06-15)<br>entire document | 1-17 |
| A | EP 3130943 A1 (TRIMBLE INC.) 15 February 2017 (2017-02-15)<br>entire document | 1-17 |

Form PCT/ISA/210 (second sheet) (July 2022)

43

INTERNATIONAL SEARCH REPORT
Information on patent family members

International application No.

**PCT/CN2023/084546**

| Patent document cited in search report | | | Publication date (day/month/year) | Patent family member(s) | | | Publication date (day/month/year) |
|---|---|---|---|---|---|---|---|
| CN | 113703011 | A | 26 November 2021 | None | | | |
| CN | 113447964 | A | 28 September 2021 | None | | | |
| CN | 103676634 | A | 26 March 2014 | CN | 103676634 | B | 30 December 2015 |
| CN | 105959091 | A | 21 September 2016 | CN | 105959091 | B | 08 March 2019 |
| CN | 111060940 | A | 24 April 2020 | None | | | |
| CN | 112968746 | A | 15 June 2021 | None | | | |
| EP | 3130943 | A1 | 15 February 2017 | EP | 3130943 | B1 | 09 March 2022 |
| | | | | US | 2017045624 | A1 | 16 February 2017 |
| | | | | US | 10078140 | B2 | 18 September 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210327298